(19) **Europäisches Patentamt**
**European Patent Office**
**Office européen des brevets**

(11) **EP 3 419 337 B1**

(12) **EUROPEAN PATENT SPECIFICATION**

(45) Date of publication and mention
of the grant of the patent:
**27.11.2019 Bulletin 2019/48**

(51) Int Cl.:
*H04W 36/24* *(2009.01)*    *H04W 36/02* *(2009.01)*

(21) Application number: **16894838.8**

(22) Date of filing: **21.03.2016**

(86) International application number:
**PCT/CN2016/076848**

(87) International publication number:
**WO 2017/161479 (28.09.2017 Gazette 2017/39)**

(54) **CELL HANDOVER METHOD, APPARATUS AND SYSTEM**

ZELLENÜBERGABEVERFAHREN, -VORRICHTUNG UND -SYSTEM

PROCÉDÉ, APPAREIL ET SYSTÈME DE TRANSFERT INTERCELLULAIRE DE CELLULE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.12.2018 Bulletin 2018/52**

(73) Proprietor: **Huawei Technologies Co., Ltd.
Longgang District
Shenzhen, Guangdong 518129 (CN)**

(72) Inventors:
• **TANG, Xun
Shenzhen
Guangdong 518129 (CN)**
• **QUAN, Wei
Shenzhen
Guangdong 518129 (CN)**
• **CHAI, Li
Shenzhen
Guangdong 518129 (CN)**
• **MIAO, Jinhua
Shenzhen
Guangdong 518129 (CN)**

(74) Representative: **Maiwald Patent- und
Rechtsanwaltsgesellschaft mbH
Elisenhof
Elisenstraße 3
80335 München (DE)**

(56) References cited:
EP-A1- 2 503 820     WO-A1-2011/044996
CN-A- 101 047 622     CN-A- 102 123 457
CN-A- 103 428 796     US-A1- 2008 267 127
US-A1- 2008 267 131

• **QUALCOMM INCORPORATED: "Handover Latency Improvements", 3GPP DRAFT; R2-154810_HANDOVER_LATENCY, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Malmo, Sweden; 20151005 - 20151009 4 October 2015 (2015-10-04), XP051005279, Retrieved from the Internet: URL:http://www.3gpp.org/ftp/Meetings_3GPP_ SYNC/RAN2/Docs/ [retrieved on 2015-10-04]**
• **ETRI: "Synchronized Handover for Latency Reduction", 3GPP DRAFT; R2-156412-SYNCHRONIZED HANDOVER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Anaheim, USA; 20151116 - 20151120 16 November 2015 (2015-11-16), XP051005834, Retrieved from the Internet: URL:http://www.3gpp.org/ftp/Meetings_3GPP_ SYNC/RAN2/Docs/ [retrieved on 2015-11-16]**

## Description

### TECHNICAL FIELD

Embodiments of the present invention relate to the field of wireless communications technologies, and specifically, to a cell handover method and system, and a device.

### BACKGROUND

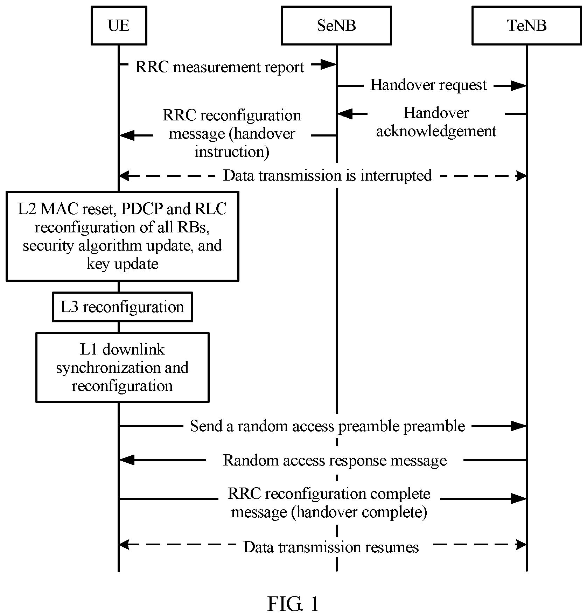

In a Long Term Evolution (LTE) system, when user equipment (UE) moves, the user equipment may enter one cell from another, and in this case, a cell handover procedure of the UE may be triggered. The cell handover procedure of the UE may be shown in FIG. 1. FIG. 1 is a schematic flowchart of a cell handover method according to the prior art. As shown in FIG. 1, the UE completes measuring a neighboring cell based on a configuration of an evolved NodeB (eNB) (also referred to as a "source eNB" or "SeNB") to which a current cell belongs, and feeds back a measurement report to the source eNB. The source eNB determines, based on signal strength of the current cell and signal strength of the neighboring cell (also referred to as a "target cell"), whether a cell handover is required. If a cell handover is required, the source eNB sends a handover request to an eNB (also referred to as a "target eNB" or "TeNB") to which the neighboring cell belongs. If the target eNB has enough resources to be allocated to the UE, the target eNB feeds back a handover acknowledgement message to the source eNB, and then the source eNB sends a handover instruction to the UE. After receiving the handover instruction sent by the source eNB, the UE is disconnected from the source eNB, data transmission between the UE and the source eNB is stopped, and the UE starts to monitor downlink synchronization information of the neighboring cell. After completing downlink synchronization with the neighboring cell, the UE sends a random access preamble to the target eNB. After detecting a preamble sequence in the random access preamble, the target eNB sends a timing advance (TA) and an uplink grant (UL-Grant) indication message to the UE. Then the UE feeds back a handover complete message to the target eNB, and the target eNB returns an acknowledgement (ACK) message. In this case, the cell handover procedure ends, and data transmission resumes.

In the foregoing handover procedure, data transmission between the UE and the source eNB is interrupted, and an average time of data transmission interruption is 50 ms. For application scenarios such as an online video and a real-time game, a longest time of data transmission interruption that a user can tolerate is 20 ms to 25 ms. The handover procedure in the prior art cannot meet a user requirement, and a quick efficient processing manner needs to be provided.

US 2008 267 131 A1 discloses, for a handover, to send a first measurement report by the UE to the first base station. Then, a handover decision is transferred from the first base station to the UE, along with some required data. Afterward, UE 109 accesses RACH with the reserved signature in the specified slot in base station 102. In following steps, DL allocation is performed and the handover command is given. The UE, then, performs the handover.

### SUMMARY

The present invention is defined by the appended claims. Embodiments of the present invention disclose a cell handover method and system, and a device, so as to resolve a disadvantage in the prior art.

A first aspect of the embodiments of the present invention discloses a cell handover method, and the method includes:

> sending, by user equipment UE, a first measurement report to a first evolved NodeB eNB, where the first eNB is a base station to which a current cell serving the UE belongs, and the first measurement report is used to indicate that the current cell and a neighboring cell of the current cell meet a pre-handover condition, in other words, the UE reports the first measurement report to the first eNB when results of measurement performed by the UE on signal strength of the current cell and signal strength of the neighboring cell of the current cell meet a trigger condition for a pre-handover A3 event; and the trigger condition for the pre-handover A3 event is that signal quality of the neighboring cell is higher than signal quality of the current cell, in other words, a difference between the signal strength of the neighboring cell and the signal strength of the current cell reaches a first preset signal strength threshold;
> receiving, by the UE, a pre-handover instruction returned by the first eNB for the first measurement report, where the pre-handover instruction includes an index identifier and configuration information corresponding to a second eNB, the pre-handover instruction is used to instruct the UE to send a random access preamble indicated by the index identifier, and the second eNB is a base station to which the neighboring cell belongs;
> sending, by the UE in response to the pre-handover instruction, the random access preamble indicated by the index identifier;
> sending, by the UE, a second measurement report to the first eNB, and receiving a handover instruction returned by the first eNB for the second measurement report, wherein the second measurement report is used to indicate that the current cell and the neighboring cell meet a handover condition, and the handover instruction is used to instruct the UE to switch a cell serving the UE from the current cell to the neighboring cell;

enabling, by the UE, the radio bearer in response to the handover instruction;

sending, by the UE, a cell handover complete indication message to the second eNB.

establishing, by the UE based on the configuration information, a radio bearer corresponding to the second eNB, where the radio bearer includes a signaling radio bearer (SRB) and a data radio bearer (DRB); and

receiving, by the UE, a timing advance and an uplink indication message, where the uplink indication message is used to indicate an uplink resource used when the UE communicates with the second eNB, and the timing advance is used by the UE to perform uplink synchronization with the second eNB.

It can be learned that in this embodiment of the present invention, a cell pre-handover procedure can be executed before a cell handover procedure without affecting communication between the UE and the current cell, in other words, resource preparation can be performed for the cell handover in a process of communication between the UE and the current cell.

In a possible implementation, the method may further include:

sending, by the UE, a second measurement report to the first eNB, and receiving a handover instruction returned by the first eNB for the second measurement report, where the second measurement report is used to indicate that the current cell and the neighboring cell meet a handover condition, in other words, the UE reports the second measurement report to the first eNB when the results of measurement performed by the UE on the signal strength of the current cell and the signal strength of the neighboring cell of the current cell meet a trigger condition for a handover A3 event; the trigger condition for the handover A3 event is that the signal quality of the neighboring cell is higher than the signal quality of the current cell, in other words, the difference between the signal strength of the neighboring cell and the signal strength of the current cell reaches a second preset signal strength threshold; and the second preset signal strength threshold is greater than the first preset signal strength threshold, and the handover instruction is used to instruct the UE to switch a cell serving the UE from the current cell to the neighboring cell; and

enabling, by the UE, the radio bearer in response to the handover instruction, and sending a cell handover complete indication message to the second eNB.

In this possible implementation, a cell handover can be quickly completed by using a resource prepared for the cell handover in advance, so that a time of data transmission interruption in the cell handover procedure is reduced, and user experience is enhanced.

In another possible implementation, the pre-handover instruction is specifically used to instruct the UE to send, based on downlink timing, the random access preamble indicated by the index identifier, and the pre-handover instruction may further include a physical random access channel PRACH time-frequency resource used to send the random access preamble.

In still another possible implementation, the downlink timing is downlink timing of the current cell, the PRACH time-frequency resource is a resource of the current cell, and the random access preamble is allocated by the first eNB.

In still another possible implementation, the downlink timing is downlink timing of the neighboring cell, the PRACH time-frequency resource is a resource of the neighboring cell, and the random access preamble is allocated by the second eNB.

In still another possible implementation, if the downlink timing is downlink timing of the neighboring cell, the pre-handover instruction may further include gap information of a target gap, and the gap information of the target gap includes at least one of a start frame identifier of the target gap, a subframe identifier of the target gap, a time length of the target gap, and an interval of the target gap. The target gap is exclusively used by the UE to send the random access preamble, and the first eNB does not perform uplink or downlink scheduling for the UE in the target gap. The target gap may be a short gap that only allows the UE to send the random access preamble, or may be a long gap that can not only allow the UE to send the random access preamble but also allow the UE to receive a random access response message returned by the second eNB.

The sending, by the UE in response to the pre-handover instruction, the random access preamble indicated by the index identifier may include:

in response to the pre-handover instruction, sending, by the UE, the random access preamble in the target gap based on the downlink timing by using the PRACH time-frequency resource.

In still another possible implementation, the pre-handover instruction may be further used to instruct the UE to use a key between the UE and the first eNB as a key to the radio bearer and use a security algorithm between the UE and the first eNB as a security algorithm for the radio bearer. The UE continues to use the key between the UE and the first eNB as the key to the SRB and the DRB and use the security algorithm between the UE and the first eNB as the security algorithm for the SRB and the DRB, so that updating of a key and a security algorithm can be reduced, and a time of data transmission interruption in the cell pre-handover procedure can be further reduced.

Compared with an existing handover request message, an existing handover acknowledgement message, and an existing handover instruction, content of each of the pre-handover request message, the pre-handover acknowledgement message, and the pre-handover instruction further includes a pre-handover identifier, and other content is the same.

It should be noted that there may be a plurality of neighboring cells of the current cell, the UE needs to execute a pre-handover procedure for different second eNBs to which the plurality of neighboring cells belong, in other words, the UE is to establish a set that includes an SRB, a DRB, and related configuration parameters and that corresponds to each second eNB, and each second eNB also needs to establish an SRB and a DRB corresponding to the UE. In this case, the second handover instruction carries a cell identity, for example, a cell radio network temporary identifier (C-RNTI), of one of the neighboring cells, so as to instruct the UE to switch the cell serving the UE from the current cell to the neighboring cell identified by the C-RNTI.

A second aspect of the embodiments of the present invention discloses another cell handover method, and the method includes:

receiving, by a first evolved NodeB eNB, a first measurement report sent by user equipment UE, where the first eNB is a base station to which a current cell serving the UE belongs, and the first measurement report is used to indicate that signal strength measurement results of the current cell and a neighboring cell of the current cell meet a pre-handover condition;

when the first eNB determines, based on the first measurement report, that a pre-handover procedure needs to be executed, sending, by the first eNB, a pre-handover request message to a second eNB, where the pre-handover request message is used to request the second eNB to indicate whether the UE is to execute a pre-handover procedure, and the second eNB is a base station to which the neighboring cell belongs;

receiving, by the first eNB, a pre-handover acknowledgement message returned by the second eNB in response to the pre-handover request message, where the pre-handover acknowledgement message is used to trigger the first eNB to send a pre-handover instruction to the UE; and

sending, by the first eNB, a pre-handover instruction to the UE based on the pre-handover acknowledgement message, where the pre-handover instruction may include an index identifier and configuration information corresponding to the second eNB, and the pre-handover instruction is used to instruct the UE to send a random access preamble indicated by the index identifier.

It can be learned that in this embodiment of the present invention, the UE can be triggered to execute a cell pre-handover procedure before a cell handover procedure without affecting communication between the UE and the current cell, in other words, resource preparation can be performed for the cell handover in a process of communication between the UE and the current cell.

In a possible implementation, the method may further include:

receiving, by the first eNB, a second measurement report sent by the UE, where the second measurement report is used to indicate that the current cell and the neighboring cell meet a handover condition; and

sending, by the first eNB, a handover instruction for the second measurement report to the UE, where the handover instruction is used to instruct the UE to switch a cell serving the UE from the current cell to the neighboring cell.

In another possible implementation, the pre-handover instruction is specifically used to instruct the UE to send, based on downlink timing, the random access preamble indicated by the index identifier, and the pre-handover instruction may further include a physical random access channel PRACH time-frequency resource used to send the random access preamble.

In still another possible implementation, the downlink timing may be downlink timing of the current cell, the PRACH time-frequency resource is a resource of the current cell, and the random access preamble is allocated by the first eNB.

The method may further include:

sending, by the first eNB, an identifier of a time-frequency location of the random access preamble in the PRACH time-frequency resource and the index identifier to the second eNB. In this way, the second eNB can monitor, on the corresponding PRACH time-frequency resource based on the identifier of the time-frequency location and the index identifier, the random access preamble that is indicated by the index identifier and that is sent by the UE.

In still another possible implementation, the downlink timing may be downlink timing of the neighboring cell, the PRACH time-frequency resource is a resource of the neighboring cell, the random access preamble is allocated by the second eNB, and the pre-handover acknowledgement message may include an identifier of a time-frequency location of the random access preamble in the PRACH time-frequency resource, the index identifier, and the configuration information.

In still another possible implementation, if the downlink timing is downlink timing of the neighboring cell, the method may further include:

receiving, by the first eNB, a timing advance and an uplink indication message that are sent by the second eNB, and sending the timing advance and the uplink indication message to the UE, where the uplink indication message is used to indicate an uplink resource used when the UE communicates with the second eNB, and the timing advance is used by the UE to perform uplink synchronization with the second eNB.

In still another possible implementation, if the downlink timing is downlink timing of the neighboring cell, the pre-handover instruction may further include gap information of a target gap, and the gap information of the target gap includes at least one of a start frame identifier of the target gap, a subframe identifier of the target gap, a time length of the target gap, and an interval of the target gap.

In still another possible implementation, the method may further include:

receiving, by the first eNB, a timing advance and an uplink indication message that are sent by the second eNB, where the uplink indication message is used to indicate an uplink resource used when the UE communicates with the second eNB, the timing advance is calculated by the second eNB when the second eNB receives the random access preamble sent by the UE, and the timing advance is used by the UE to perform uplink synchronization with the second eNB; and

sending, by the first eNB, the timing advance and the uplink indication message to the UE.

In still another possible implementation, the pre-handover instruction may be further used to instruct the UE to use a key between the UE and the first eNB as a key to a radio bearer and use a security algorithm between the UE and the first eNB as a security algorithm for the radio bearer, and the radio bearer is a radio bearer that corresponds to the second eNB and that is established by the UE based on the configuration information.

In still another possible implementation, the method may further include:
sending, by the first eNB, the key between the UE and the first eNB and the security algorithm between the UE and the first eNB to the second eNB.

A third aspect of the embodiments of the present invention discloses still another cell handover method, and the method includes:

receiving, by a second evolved NodeB eNB, a pre-handover request message sent by a first eNB, where the pre-handover request message is used to request the second eNB to indicate whether UE is to execute a pre-handover procedure, the first eNB is a base station to which a current cell serving the UE belongs, and the second eNB is a base station to which a neighboring cell of the current cell belongs;

when the second eNB determines, based on the pre-handover request message, that a communication resource provided by the second eNB meets a communication requirement of the UE, sending, by the second eNB, a pre-handover acknowledgement message for the pre-handover request message to the first eNB, where the pre-handover acknowledgement message is used to trigger the first eNB to send a pre-handover instruction to the UE, the pre-handover instruction may include an index identifier and configuration information corresponding to the second eNB, and the pre-handover instruction is used to instruct the UE to send a random access preamble indicated by the index identifier;

receiving, by the second eNB, the random access preamble sent by the UE; and

sending, by the second eNB, a timing advance and an uplink indication message to the UE, where the uplink indication message is used to indicate an uplink resource used when the UE communicates with the second eNB, and the timing advance is used by the UE to perform uplink synchronization with the second eNB.

In a possible implementation, the method may further include:
receiving, by the second eNB, a cell handover complete indication message sent by the UE.

In another possible implementation, the pre-handover instruction is specifically used to instruct the UE to send, based on downlink timing, the random access preamble indicated by the index identifier, and the pre-handover instruction may further include a physical random access channel PRACH time-frequency resource used to send the random access preamble.

In still another possible implementation, the downlink timing is downlink timing of the current cell, the PRACH time-frequency resource is a resource of the current cell, and the random access preamble is allocated by the first eNB.

Before the receiving, by the second eNB, the random access preamble sent by the UE, the method may further include:

receiving, by the second eNB, an identifier of a time-frequency location of the random access preamble in the PRACH time-frequency resource and the index identifier, where the identifier of the time-frequency location and the index identifier are sent by the first eNB.

In still another possible implementation, the downlink timing is downlink timing of the neighboring cell, the PRACH time-frequency resource is a resource of the neighboring cell, the random access preamble is allocated by the second eNB, and the pre-handover acknowledgement message may include an identifier of a time-frequency location of the random access preamble in the PRACH time-frequency resource, the index identifier, and the configuration information.

In still another possible implementation, if the downlink timing is downlink timing of the neighboring cell, the pre-handover instruction may further include gap information of a target gap, and the gap information of the target gap includes at least one of a start frame identifier of the target gap, a subframe identifier of the target gap, a time length of the target gap, and an interval of the target gap.

In still another possible implementation, the pre-handover instruction may be further used to instruct the UE to use a key between the UE and the first eNB as a key to a data radio bearer and use a security algorithm between the UE and the first eNB as a security algorithm for the radio bearer, and the radio bearer is a radio bearer that corresponds to the second eNB and that is established by the UE based on the configuration information.

In still another possible implementation, the method may further include:

receiving, by the second eNB, the key between the UE and the first eNB and the security algorithm between the UE and the first eNB that are sent by the first eNB.

A fourth aspect of the embodiments of the present invention discloses user equipment UE, and the UE includes modules configured to perform the cell handover method disclosed in the first aspect of the embodiments of the present invention.

A fifth aspect of the embodiments of the present invention discloses an evolved NodeB eNB, and the eNB includes modules configured to perform the cell handover method disclosed in the second aspect of the embodiments of the present invention.

A sixth aspect of the embodiments of the present invention discloses an evolved NodeB eNB, and the eNB includes modules configured to perform the cell handover method disclosed in the third aspect of the embodiments of the present invention.

A seventh aspect of the embodiments of the present invention discloses user equipment UE, including a processor, a memory, a transmitter, and a receiver, where the transmitter is configured to send a first measurement report to a first evolved NodeB eNB, where the first eNB is a base station to which a current cell serving the UE belongs, and the first measurement report is used to indicate that the current cell and a neighboring cell of the current cell meet a pre-handover condition;

the receiver is configured to receive a pre-handover instruction returned by the first eNB for the first measurement report, where the pre-handover instruction includes an index identifier and configuration information corresponding to a second eNB, and the pre-handover instruction is used to instruct the UE to send, to the second eNB, a random access preamble indicated by the index identifier;

the transmitter is further configured to send, in response to the pre-handover instruction, the random access preamble indicated by the index identifier;

the memory stores a group of program code, and the processor is configured to invoke the program code stored in the memory, to perform the following operation:

establishing, based on the configuration information, a radio bearer corresponding to the second eNB; and
the receiver is further configured to receive a timing advance and an uplink indication message, where the uplink indication message is used to indicate an uplink resource used when the UE communicates with the second eNB, and the timing advance is used by the UE to perform uplink synchronization with the second eNB.

In a possible implementation, the transmitter is further configured to send a second measurement report to the first eNB, where the second measurement report is used to indicate that the current cell and the neighboring cell meet a handover condition;

the receiver is further configured to receive a handover instruction returned by the first eNB for the second measurement report, where the handover instruction is used to instruct the UE to switch a cell serving the UE from the current cell to the neighboring cell;

the processor is configured to invoke the program code stored in the memory, to further perform the following operation:

enabling the radio bearer in response to the handover instruction; and
the transmitter is further configured to send a cell handover complete indication message to the second eNB.

In another possible implementation, the pre-handover instruction is specifically used to instruct the UE to send, based on downlink timing, the random access preamble indicated by the index identifier, and the pre-handover instruction further includes a physical random access channel PRACH time-frequency resource used to send the random access preamble.

In still another possible implementation, the downlink timing is downlink timing of the current cell, the PRACH time-frequency resource is a resource of the current cell, and the random access preamble is allocated by the first eNB.

In still another possible implementation, the downlink timing is downlink timing of the neighboring cell, the PRACH time-frequency resource is a resource of the neighboring cell, and the random access preamble is allocated by the second eNB.

In still another possible implementation, the pre-handover instruction further includes gap information of a target gap, and the gap information of the target gap includes at least one of a start frame identifier of the target gap, a subframe identifier of the target gap, a time length of the target gap, and an interval of the target gap.

A specific manner in which the transmitter sends, in response to the pre-handover instruction, the random access preamble indicated by the index identifier is:

in response to the pre-handover instruction, sending, in the target gap based on the downlink timing by using the PRACH time-frequency resource, the random access preamble indicated by the index identifier.

In still another possible implementation, the pre-handover instruction may be further used to instruct the UE to use a key between the UE and the first eNB as a key to the radio bearer and use a security algorithm between the UE and the first eNB as a security algorithm for the data radio bearer.

An eighth aspect of the embodiments of the present invention discloses an evolved NodeB eNB, including a processor, a memory, a transmitter, and a receiver, where the eNB is a base station to which a current cell serving user equipment UE belongs, where

the receiver is configured to receive a first measurement report sent by the UE, where the first measurement report is used to indicate that signal strength measurement results of the current cell and a neighboring cell of the current cell meet a pre-handover condition;

the processor is configured to invoke program code stored in the memory, to perform the following operation:

determining, based on the first measurement report, whether a pre-handover procedure needs to be executed;
the transmitter is configured to: when a determining result of the processor is yes, send a pre-handover request message to a second eNB, where the pre-handover request message is used to request the second eNB to indicate whether the UE is to execute a pre-handover procedure;
the receiver is further configured to receive a pre-handover acknowledgement message returned by the second eNB in response to the pre-handover request message, where the second eNB is a base station to which the neighboring cell belongs; and
the transmitter is further configured to send a pre-handover instruction to the UE based on the pre-handover acknowledgement message, where the pre-handover instruction includes an index identifier and configuration information corresponding to the second eNB, and the pre-handover instruction is used to instruct the UE to send a random access preamble indicated by the index identifier.

In a possible implementation, the receiver is further configured to receive a second measurement report sent by the UE, where the second measurement report is used to indicate that the current cell and the neighboring cell meet a handover condition; and

the transmitter is further configured to send a handover instruction for the second measurement report to the UE, where the handover instruction is used to instruct the UE to switch a cell serving the UE from the current cell to the neighboring cell.

In another possible implementation, the pre-handover instruction is specifically used to instruct the UE to send, based on downlink timing, the random access preamble indicated by the index identifier, and the pre-handover instruction further includes a physical random access channel PRACH time-frequency resource used to send the random access preamble.

In still another possible implementation, the downlink timing is downlink timing of the current cell, the PRACH time-frequency resource is a resource of the current cell, and the random access preamble is allocated by the eNB; and

the transmitter is further configured to send an identifier of a time-frequency location of the random access preamble in the PRACH time-frequency resource and the index identifier to the second eNB.

In still another possible implementation, the downlink timing is downlink timing of the neighboring cell, the PRACH time-frequency resource is a resource of the neighboring cell, the random access preamble is allocated by the second eNB, and the pre-handover acknowledgement message includes an identifier of a time-frequency location of the random access preamble in the PRACH time-frequency resource, the index identifier, and the configuration information.

In still another possible implementation, if the downlink timing is downlink timing of the current cell, the receiver is further configured to receive a timing advance and an uplink indication message that are sent by the second eNB, where the uplink indication message is used to indicate an uplink resource used when the UE communicates with the second eNB, and the timing advance is used by the UE to perform uplink synchronization with the second eNB; and

the transmitter is further configured to send the timing advance and the uplink indication message to the UE.

In still another possible implementation, if the downlink timing is downlink timing of the neighboring cell, the pre-handover instruction further includes gap information of a target gap, and the gap information of the target gap includes at least one of a start frame identifier of the target gap, a subframe identifier of the target gap, a time length of the target gap, and an interval of the target gap.

In still another possible implementation, if the downlink timing is downlink timing of the neighboring cell, the receiver is further configured to receive a timing advance and an uplink indication message that are sent by the second eNB, where the uplink indication message is used to indicate an uplink resource used when the UE communicates with the second eNB, the timing advance is calculated by the second eNB when the second eNB receives the random access preamble sent by the UE, and the timing advance is used by the UE to perform uplink synchronization with the second eNB; and

the transmitter is further configured to send the timing advance and the uplink indication message to the UE.

In still another possible implementation, the pre-handover instruction is further used to instruct the UE to use a key between the UE and the eNB as a key to a radio bearer and use a security algorithm between the UE and the eNB as a security algorithm for the radio bearer, and the radio bearer is a radio bearer that corresponds to the second eNB and that is established by the UE based on the configuration information.

In still another possible implementation, the transmitter is further configured to send the key between the UE and the eNB and the security algorithm between the UE and the eNB to the second eNB.

A ninth aspect of the embodiments of the present invention discloses an evolved NodeB eNB, including a processor, a memory, a receiver, and a transmitter, where the eNB is a base station to which a neighboring cell of a current cell serving user equipment UE belongs, where

the receiver is configured to receive a pre-handover request message sent by a first eNB, where the pre-handover request message is used to request the eNB to indicate whether the UE is to execute a pre-handover procedure, and the first eNB is a base station to which the current cell belongs;

the memory stores a group of program code, and the processor is configured to invoke the program code stored in the memory, to perform the following operation:

determining, based on the pre-handover request message, whether a communication resource provided by the eNB meets a communication requirement of the UE;

the transmitter is configured to: when a determining result of the processor is yes, send a pre-handover acknowledgement message for the pre-handover request message to the first eNB, where the pre-handover acknowledgement message is used to trigger the first eNB to send a pre-handover instruction to the UE, the pre-handover instruction includes an index identifier and configuration information corresponding to the eNB, and the pre-handover instruction is used to instruct the UE to send a random access preamble indicated by the index identifier;

the receiver is further configured to receive the random access preamble sent by the UE; and

the transmitter is further configured to send a timing advance and an uplink indication message to the UE, where the uplink indication message is used to indicate an uplink resource used when the UE communicates with the eNB, and the timing advance is used by the UE to perform uplink synchronization with the eNB.

In a possible implementation, the receiver is further configured to receive a cell handover complete indication message sent by the UE.

In another possible implementation, the pre-handover instruction is specifically used to instruct the UE to send, based on downlink timing, the random access preamble indicated by the index identifier, and the pre-handover instruction further includes a physical random access channel PRACH time-frequency resource used to send the random access preamble.

In still another possible implementation, the downlink timing is downlink timing of the current cell, the PRACH time-frequency resource is a resource of the current cell, and the random access preamble is allocated by the first eNB; and the receiver is further configured to receive an identifier of a time-frequency location of the random access preamble in the PRACH time-frequency resource and the index identifier, where the identifier of the time-frequency location and the index identifier are sent by the first eNB.

In still another possible implementation, the downlink timing is downlink timing of the neighboring cell, the PRACH time-frequency resource is a resource of the neighboring cell, the random access preamble is allocated by the eNB, and the pre-handover acknowledgement message includes an identifier of a time-frequency location of the random access preamble in the PRACH time-frequency resource, the index identifier, and the configuration information.

In still another possible implementation, if the downlink timing is downlink timing of the neighboring cell, the pre-handover instruction further includes gap information of a target gap, and the gap information of the target gap includes at least one of a start frame identifier of the target gap, a subframe identifier of the target gap, a time length of the target gap, and an interval of the target gap.

In still another possible implementation, the pre-handover instruction is further used to instruct the UE to use a key between the UE and the first eNB as a key to a radio bearer and use a security algorithm between the UE and the first eNB as a security algorithm for the radio bearer, and the radio bearer is a radio bearer that corresponds to the eNB and that is established by the UE based on the configuration information.

In still another possible implementation, the receiver is further configured to receive the key between the UE and the first eNB and the security algorithm between the UE and the first eNB that are sent by the first eNB.

A tenth aspect of the embodiments of the present invention discloses a cell handover system, including the UE disclosed in the seventh aspect of the embodiments of the present invention, the eNB, disclosed in the eighth aspect of the embodiments of the present invention, to which a current cell serving the UE belongs, and the eNB, disclosed in the ninth aspect of the embodiments of the present invention, to which a neighboring cell of the current cell belongs.

In the embodiments of the present invention, after receiving the pre-handover instruction sent by the first eNB, the UE sends the random access preamble, and establishes, based on the configuration information in the pre-handover instruction, the radio bearer corresponding to the second eNB; and the UE receives the timing advance used by the UE to perform uplink synchronization with the second eNB and the uplink indication message used to indicate the uplink resource used when the UE communicates with the second eNB. It can be learned that in the embodiments of the present invention, a cell pre-handover procedure can be executed before a cell handover procedure without affecting communication between the UE and the current cell, in other words, resource preparation can be performed for the cell handover in a process of communication between the UE and the current cell.

**BRIEF DESCRIPTION OF DRAWINGS**

To describe the technical solutions in the embodiments of the present invention or in the prior art more clearly, the following briefly describes the accompanying drawings required for describing the embodiments. Apparently, the accompanying drawings in the following description show merely some embodiments of the present invention, and a person of ordinary skill in the art may derive other drawings from these accompanying drawings without creative efforts.

FIG. 1 is a schematic flowchart of a cell handover method according to the prior art;
FIG. 2 is a schematic diagram of an application architecture according to an embodiment of the present invention;
FIG. 3 is a schematic flowchart of a cell handover method according to an embodiment of the present invention;
FIG. 4A, FIG. 4B, and FIG. 4C are a schematic flowchart of another cell handover method according to an embodiment of the present invention;
FIG. 5A, FIG. 5B, and FIG. 5C are a schematic flowchart of still another cell handover method according to an embodiment of the present invention;
FIG. 6A and FIG. 6B are a schematic flowchart of still another cell handover method according to an embodiment of the present invention;
FIG. 7 is a schematic structural diagram of user equipment UE according to an embodiment of the present invention;
FIG. 8 is a schematic structural diagram of another user equipment UE according to an embodiment of the present invention;
FIG. 9 is a schematic structural diagram of an evolved NodeB eNB according to an embodiment of the present invention;
FIG. 10 is a schematic structural diagram of another evolved NodeB eNB according to an embodiment of the present invention;
FIG. 11 is a schematic structural diagram of still another evolved NodeB eNB according to an embodiment of the present invention;
FIG. 12 is a schematic structural diagram of still another evolved NodeB eNB according to an embodiment of the present invention; and
FIG. 13 is a schematic structural diagram of a cell handover system according to an embodiment of the present invention.

**DESCRIPTION OF EMBODIMENTS**

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

The embodiments of the present invention disclose a cell handover method and system, and a device, so that a cell pre-handover procedure can be executed before a cell handover procedure without affecting communication between UE and a current cell, in other words, resource preparation can be performed for the cell handover in a process of communication between the UE and the current cell. Details are separately described below.

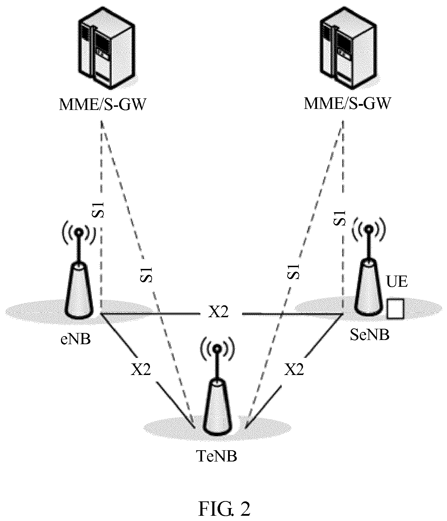

For better understanding of the cell handover method and system, and the device disclosed in the embodiments of the present invention, the following first describes an application architecture to which the embodiments of the present invention are applicable. Referring to FIG. 2, FIG. 2 is a schematic architectural diagram of an application architecture according to an embodiment of the present invention. As shown in FIG. 2, the application architecture is used to represent a cell handover scenario in an LTE system, and the application architecture may include UE and at least two eNBs. The at least two eNBs include a first eNB (also referred to as a "source eNB" or "SeNB") and a second eNB (also referred to as a "target eNB" or "TeNB"). A current cell serving the UE is deployed in coverage of the SeNB, and in a cell handover procedure, the SeNB can determine, based on a measurement report of the UE, whether a pre-handover procedure/a handover procedure needs to be executed. A neighboring cell (also referred to as a "target cell") of the current cell is deployed in coverage of the TeNB, and when the TeNB receives a pre-handover request/a handover request sent by the SeNB, the TeNB can determine, based on current resource usage of the TeNB, whether to accept the pre-handover request/the handover request. The UE is handed over from the current cell to the neighboring cell in the cell handover procedure, and an eNB serving the UE is also switched from the SeNB to the TeNB accordingly. The eNBs may be connected to each other by using an X2 interface, or may communicate with each other through relay of a mobility management entity (MME) by using an S1 interface.

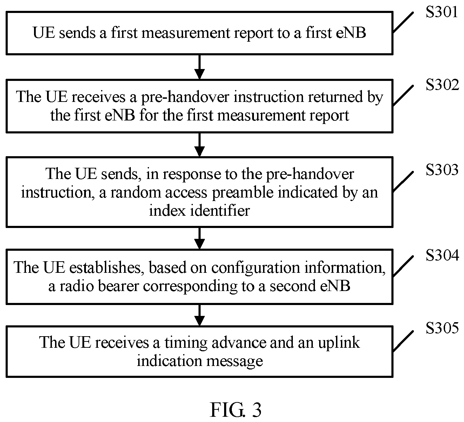

Referring to FIG. 3, FIG. 3 is a schematic flowchart of a cell handover method according to an embodiment of the present invention. As shown in FIG. 3, the cell handover method may include the following operations.

S301. UE sends a first measurement report to a first eNB.

In this embodiment of the present invention, the first eNB is a base station to which a current cell serving the UE belongs, that is, the SeNB in FIG. 2. The first measurement report is used to indicate that the current cell and a neighboring cell of the current cell meet a pre-handover condition. In other words, the UE reports the first measurement report to the first eNB when results of measurement performed by the UE on signal strength of the current cell and signal strength of the neighboring cell of the current cell meet a trigger condition for a pre-handover A3 event. The trigger condition for the pre-handover A3 event is that signal quality of the neighboring cell is higher than signal quality of the current cell, in other words, a difference between the signal strength of the neighboring cell and the signal strength of the current cell reaches a first preset signal strength threshold. This is specifically determined in the following formula:

$$Mn + Ofn + Ocn - Hys > Mp + Ofp + Ocp + Off$$

In addition, a leaving condition for the pre-handover A3 event is that the signal quality of the neighboring cell is lower than the signal quality of the current cell. This is specifically determined in the following formula:

$$Mn + Ofn + Ocn + Hys < Mp + Ofp + Ocp + Off$$

$Mn$ is a signal strength measurement result of the neighboring cell, for example, reference signal received power (RSRP,) or reference signal received quality (RSRQ), $Ofn$ is an offset corresponding to a frequency of the neighboring cell, $Ocn$ is an offset of the neighboring cell, $Mp$ is a signal strength measurement result of the current cell, for example, RSRP or RSRQ, $Ofp$ is an offset corresponding to a frequency of the current cell, $Ocp$ is an offset of the current cell, $Hys$ is a hysteresis parameter of the pre-handover A3 event, and $Off$ is an offset parameter of the pre-handover A3 event. If the signal strength measurement result is RSRP, $Mn$ and $Mp$ are measured in dBm; or if the signal strength measurement result is RSRQ, $Mn$ and $Mp$ are measured in dB. $Ofn$, $Ocn$, $Ofp$, $Ocp$, $Hys$, and $Off$ are measured in dB. If the current cell and the neighboring cell have a same frequency, $Ofn$ is equal to $Ofp$, and the trigger condition for the pre-handover A3 event is mainly controlled by four parameters: $Ocn$, $Ocp$, $Hys$, and $Off$. On the basis of existing usual parameters of a handover A3 event, if the trigger condition for the pre-handover A3 event needs to be weakened, larger $Ocn$ or smaller $Ocp$, $Hys$, and $Off$ may be set for the pre-handover A3 event, to reduce difficulty of triggering the pre-handover A3 event. In other words, at least one of the four parameters: $Ocn$, $Ocp$, $Hys$, and $Off$ is different from a value of the handover A3 event.

In this embodiment of the present invention, the UE sends the first measurement report to the first eNB, so that the first eNB performs the following operations:

determining, by the first eNB based on the first measurement report, whether a pre-handover procedure needs to be executed;

when a determining result is yes, sending, by the first eNB, a pre-handover request message to a second eNB, where the pre-handover request message is used to request the second eNB to indicate whether the UE is to execute a pre-handover procedure, and the second eNB is a base station to which the neighboring cell belongs, that is, the TeNB shown in FIG. 2; and

after the first eNB receives a pre-handover acknowledgement message returned by the second eNB for the pre-handover request message, sending, by the first eNB, a pre-handover instruction to the UE based on the pre-handover acknowledgement message, where the pre-handover acknowledgement message is used to trigger the first eNB to send the pre-handover instruction to the UE.

S302. The UE receives a pre-handover instruction returned by the first eNB for the first measurement report.

The pre-handover instruction may include an index identifier of a random access preamble and configuration information that is of a signaling radio bearer (SRB) and a data radio bearer (DRB) and that corresponds to the second eNB, and the pre-handover instruction is used to instruct the UE to send the random access preamble indicated by the index identifier.

S303. The UE sends, in response to the pre-handover instruction, a random access preamble indicated by an index identifier.

Specifically, after receiving the pre-handover instruction, the UE determines, based on the index identifier included in the pre-handover instruction, the random access preamble indicated by the index identifier, and sends the determined random access preamble.

S304. The UE establishes, based on configuration information, a radio bearer corresponding to a second eNB.

The radio bearer may include an SRB and a DRB.

S305. The UE receives a timing advance (TA) and an uplink indication message.

The uplink indication message is used to indicate an uplink resource used when the UE communicates with the second eNB, and the timing advance is used by the UE to perform uplink synchronization with the second eNB.

The UE interacts with the first eNB, so that the UE has performed resource preparation for being quickly handed over to the second eNB.

The method in this embodiment of the present invention may further include:

sending, by the UE, a second measurement report to the first eNB;

receiving, by the UE, a handover instruction returned by the first eNB for the second measurement report; and

enabling, by the UE, the SRB and the DRB in response to the handover instruction, and sending a cell handover complete indication message to the second eNB.

The second measurement report is used to indicate that the results of measurement performed by the UE on the signal strength of the current cell and the signal strength of the neighboring cell meet a handover condition. In other words, the UE reports the second measurement report to the first eNB when the results of measurement performed by the UE on the signal strength of the current cell and the signal strength of the neighboring cell of the current cell meet a trigger condition for the handover A3 event. The trigger condition for the handover A3 event is that the signal quality of the neighboring cell is higher than the signal quality of the current cell, in other words, a difference between the signal strength of the neighboring cell and the signal strength of the current cell reaches a second preset signal strength threshold. The second preset signal strength threshold is greater than the first preset signal strength threshold. In addition, the UE sends the second measurement report to the first eNB, so as to trigger the first eNB to determine, based on the second measurement report, whether a handover procedure needs to be executed. When a determining result of the first eNB is yes, the first eNB sends the handover instruction for the second measurement report to the UE. The handover instruction is used to instruct the UE to switch a cell serving the UE from the current cell to the neighboring cell.

It should be noted that step S305 may occur between step S303 and step S304, and this is not limited in this embodiment of the present invention.

In an optional embodiment, the pre-handover instruction is specifically used to instruct the UE to send, to the second eNB based on downlink timing, the random access preamble indicated by the index identifier, and the pre-handover instruction may further include a physical random access channel (PRACH) time-frequency resource used to send the random access preamble. The sending, by the UE, a random access preamble in response to the pre-handover instruction may include:

sending, by the UE, a random access preamble on the PRACH time-frequency resource based on the downlink timing in response to the pre-handover instruction.

In an optional implementation of the optional embodiment, the downlink timing is downlink timing of the current cell, the PRACH time-frequency resource is a resource of the current cell, and the random access preamble is allocated by the first eNB.

In this optional implementation, further optionally, the receiving, by the UE, a timing advance and an uplink indication message may include:

receiving, by the UE, the timing advance and the uplink indication message that are sent by the first eNB.

Specifically, the UE first sends a downlink timing offset $\Delta T$ of the neighboring cell relative to the current cell to the first eNB, and the first eNB sends the downlink timing offset $\Delta T$ to the second eNB, so that the second eNB calculates the timing advance of the UE after detecting the random access preamble on the corresponding PRACH time-frequency resource. A corresponding calculation formula may be as follows:

$$\text{TeNB TA} = \text{TA 1} + \Delta T$$

TA 1 is calculated by the second eNB when the second eNB receives the random access preamble on the corresponding PRACH time-frequency resource. Optionally, the UE may send the downlink timing offset $\Delta T$ of the neighboring cell relative to the current cell to the first eNB after step S303 and before step S305, or before step S301, and this is not limited in this embodiment of the present invention.

In another optional implementation of the optional embodiment, the downlink timing is downlink timing of the neighboring cell, the PRACH time-frequency resource is a resource of the neighboring cell, the random access preamble is allocated by the second eNB, and the timing advance received by the UE is calculated by the second eNB when the second eNB receives the random access preamble.

In the another optional implementation, further optionally, the pre-handover instruction may further include gap information of a target gap configured by the second eNB for the UE, and the gap information may include at least one of a start frame identifier of the target gap, a subframe identifier of the target gap, a time length of the target gap, and an interval of the target gap. The target gap is exclusively used by the UE to send the random access preamble, and the first eNB does not perform uplink or downlink scheduling for the UE in the target gap. The sending, by the UE, the random access preamble in response to the pre-handover instruction may include:

sending, by the UE in response to the pre-handover instruction, the random access preamble in the target gap based on the downlink timing by using the PRACH time-frequency resource.

The target gap may be a short gap that only allows the UE to send the random access preamble, or may be a long gap that can not only allow the UE to send the random access preamble but also allow the UE to receive a random access response message returned by the second eNB. This is not limited in this embodiment of the present invention.

When the target gap is a short gap, the receiving, by the UE, a timing advance and an uplink indication message may include:

receiving, by the UE, the timing advance and the uplink indication message that are sent by the first eNB, where the second eNB sends the timing advance and the uplink indication message to the first eNB, and the first eNB forwards the timing advance and the uplink indication message to the UE.

When the target gap is a long gap, the receiving, by the UE, a timing advance and an uplink indication message may include:

receiving, by the UE in the target gap, the timing advance and the uplink indication message that are sent by the second eNB, where the uplink indication message is used to indicate an uplink resource used when the UE communicates with the second eNB, and the timing advance and the uplink indication message may be included in a random access response message sent by the second eNB to the UE.

In an optional implementation, the pre-handover instruction may be further used to indicate, to the UE, whether a key and a security algorithm for data communication between the UE and the second eNB are to be updated, to be specific, whether the UE continues to use a key between the UE and the first eNB as a key to the SRB and the DRB and uses a security algorithm between the UE and the first eNB as a security algorithm for the SRB and the DRB. A key change indicator keyChangeIndicator in a security configuration information element in the pre-handover instruction may be extended to indicate, to the UE, whether the key for data communication between the UE and the second eNB is to be updated. To be specific, extended keyChangeIndicator is represented by 2 bits, that the most significant bit is 1 indicates that there is no update, that the most significant bit is 0 indicates that there is an update, and when the most significant bit is 0, that the least significant bit is 1 indicates that a new key is vertically derived, and that the least significant bit is 0 indicates that a new key is horizontally derived. The first eNB sends the key between the UE and the first eNB, or the key between the UE and the first eNB and a method for deriving a new key to the second eNB. The UE continues to use the key between the UE and the first eNB as the key to the SRB and the DRB and use the security algorithm between the UE and the first eNB as the security algorithm for the SRB and the DRB, so that updating of a key and a security algorithm can be reduced, and a time of a cell pre-handover procedure can be reduced.

Compared with an existing handover request message, an existing handover acknowledgement message, and an existing handover instruction, content of each of the pre-handover request message, the pre-handover acknowledgement message, and the pre-handover instruction further includes a pre-handover identifier, and other content is the same.

It should be noted that there may be a plurality of neighboring cells of the current cell, the UE needs to execute a pre-handover procedure for different second eNBs to which the plurality of neighboring cells belong, in other words, the UE is to establish a set that includes an SRB, a DRB, and related configuration parameters and that corresponds to each second eNB, and each second eNB also needs to establish an SRB and a DRB corresponding to the UE. In this case, the second handover instruction carries a cell identity, for example, a cell radio network temporary identifier (C-RNTI), of one of the neighboring cells, so as to instruct the UE to switch the cell serving the UE from the current cell to the neighboring cell identified by the C-RNTI.

It can be learned that in this embodiment of the present invention, the cell pre-handover procedure can be executed before the cell handover procedure without affecting communication between the UE and the current cell, in other words, resource preparation can be performed for the cell handover in a process of communication between the UE and the current cell, so that a time of data transmission interruption in the cell handover procedure can be reduced, and user experience can be enhanced.

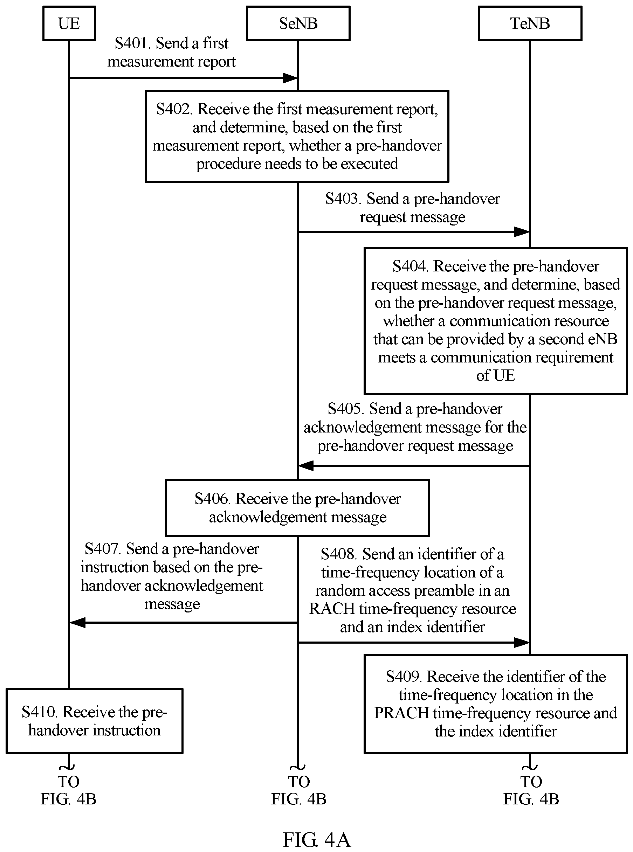

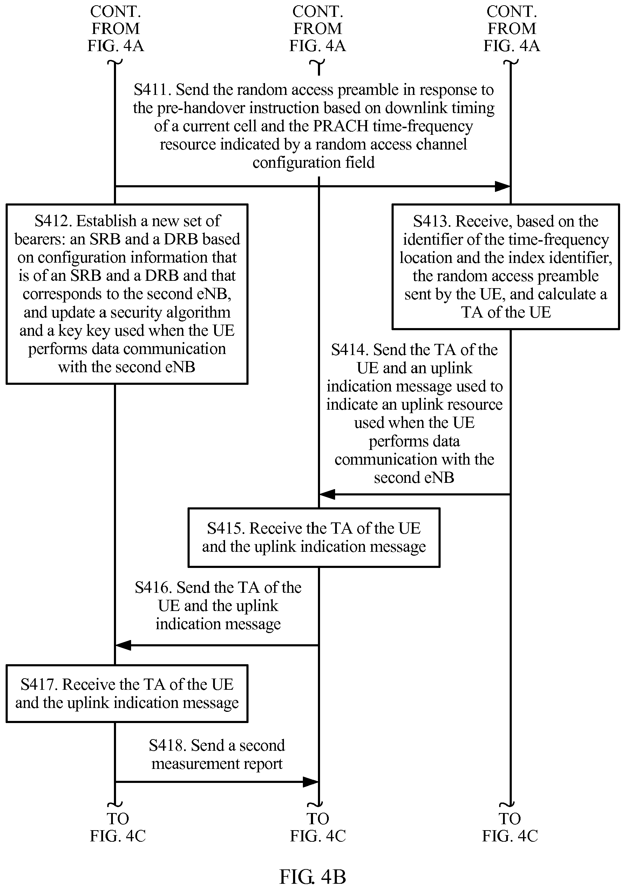

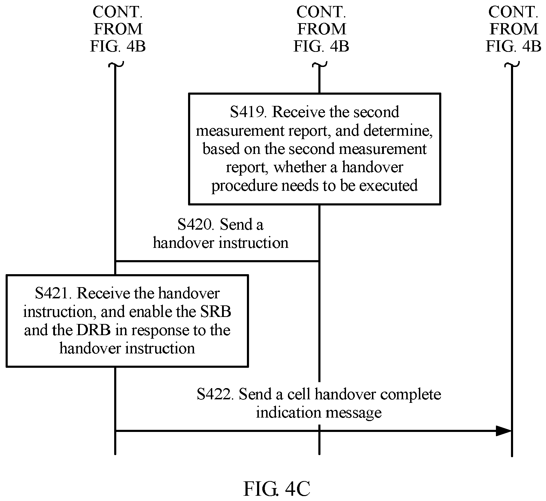

Referring to FIG. 4A, FIG. 4B, and FIG. 4C, FIG. 4A, FIG. 4B, and FIG. 4C are a schematic flowchart of another cell handover method according to an embodiment of the present invention. In FIG. 4A, FIG. 4B, and FIG. 4C, descriptions are provided by using an example in which UE sends a random access preamble based on a PRACH configuration of a current cell. As shown in FIG. 4A, FIG. 4B, and FIG. 4C, the cell handover method may include the following steps.

S401. The UE sends a first measurement report to a first eNB (SeNB).

In this embodiment of the present invention, the first eNB is a base station to which a current cell serving the UE belongs, that is, the SeNB in FIG. 2. The first measurement report is used to indicate that results of measurement performed by the UE on signal strength of the current cell and signal strength of a neighboring cell of the current cell meet a pre-handover condition. In other words, the UE reports the first measurement report to the first eNB when the results of measurement performed by the UE on the signal strength of the current cell and the signal strength of the neighboring cell of the current cell meet a trigger condition for a pre-handover A3 event.

S402. The first eNB receives the first measurement report, and determines, based on the first measurement report, whether a pre-handover procedure needs to be executed.

In this embodiment of the present invention, when a determining result of step S402 is yes, step S403 is performed; or when a determining result of step S402 is no, the current procedure may be terminated.

S403. The first eNB sends a pre-handover request message to a second eNB.

The pre-handover request message is used to request the second eNB to indicate whether the UE is to execute a pre-handover procedure, the second eNB is a base station (that is, the TeNB in FIG. 2) to which the neighboring cell belongs, and message content of the pre-handover request message further includes a pre-handover identifier compared with message content of a handover request message in the prior art.

S404. The second eNB receives the pre-handover request message sent by the first eNB, and determines, based on the pre-handover request message, whether a communication resource that can be provided by the second eNB meets a communication requirement of the UE.

In this embodiment of the present invention, when a determining result of step S404 is no, the second eNB sends, to the first eNB, an indication message indicating that the UE is not to perform a pre-handover operation for the neighboring cell of the second eNB; or when a determining result of step S404 is yes, step S405 is performed.

S405. The second eNB sends a pre-handover acknowledgement message for the pre-handover request message to the first eNB.

The pre-handover acknowledgement message is used to indicate that the UE is to execute a pre-handover procedure and is used to trigger the first eNB to send a pre-handover instruction to the UE.

S406. The first eNB receives the pre-handover acknowledgement message.

S407. The first eNB sends a pre-handover instruction to the UE based on the pre-handover acknowledgement message.

The pre-handover instruction may include an index identifier of a random access preamble allocated by the first eNB, configuration information that is of an SRB and a DRB and that corresponds to the second eNB, configuration information of a Media Access Control (MAC) layer, and a PRACH time-frequency resource that is of the current cell and that is used to send the random access preamble. The pre-handover instruction is used to instruct the UE to send, on the PRACH time-frequency resource based on downlink timing of the current cell, the random access preamble indicated by the index identifier, and instruct the UE to update a key and a security algorithm used when the UE performs data communication with the second eNB. Specifically, a dedicated random access channel configuration rach-ConfigDedicated field included in an information element (IE) of mobility control information MobilityConttolInfo in the pre-handover instruction indicates the PRACH time-frequency resource used to send the random access preamble, a dedicated radio resource configuration information element radioResourceConfigDedicated IE includes the configuration information that is of the SRB and the DRB and that corresponds to the second eNB and the configuration information of the Media Access Control (MAC) layer, and a local security configuration information element securityConfigHO IE may include an update instruction for the security algorithm and the key.

S408. The first eNB sends an identifier of a time-frequency location of a random access preamble in a PRACH time-frequency resource and an index identifier to the second eNB.

S409. The second eNB receives the identifier of the time-frequency location in the PRACH time-frequency resource and the index identifier.

S410. The UE receives the pre-handover instruction.

S411. The UE sends the random access preamble in response to the pre-handover instruction based on downlink timing of a current cell and the PRACH time-frequency resource indicated by a random access channel configuration field.

S412. The UE establishes a new set of bearers: an SRB and a DRB based on configuration information that is of an SRB and a DRB and that corresponds to the second eNB, and updates a security algorithm and a key used when the UE performs data communication with the second eNB.

The new SRB and DRB established by the UE do not affect an SRB and a DRB that are being used for the current cell.

S413. The second eNB receives, based on the identifier of the time-frequency location and the index identifier, the random access preamble sent by the UE, and calculates a TA of the UE.

Specifically, the second eNB may pre-receive a downlink timing offset $\Delta T$ of the neighboring cell relative to the current cell that is sent by the UE. In other words, the UE first sends $\Delta T$ to the first eNB, and then the first eNB forwards $\Delta T$ to the second eNB. When receiving the random access preamble, the second eNB calculates a timing advance TA 1 and determines a sum of TA 1 and $\Delta T$ as the TA of the UE.

It should be noted that, the UE may send $\Delta T$ to the first eNB after the UE sends the random access preamble or before a pre-handover action is triggered. This is not limited in this embodiment of the present invention.

S414. The second eNB sends, to the first eNB, the TA of the UE and an uplink indication message used to indicate an uplink resource used when the UE performs data communication with the second eNB.

S415. The first eNB receives the TA of the UE and the uplink indication message.

S416. The first eNB sends the TA of the UE and the uplink indication message to the UE.

S417. The UE receives the TA and the uplink indication message that are sent by the first eNB.

When the UE performs a corresponding operation, the UE maintains normal communication with the current cell. After the UE performs the corresponding operation, the UE establishes the set of bearers: the SRB and the DRB for the neighboring cell, and the UE also obtains the TA and the uplink indication message. Therefore, the pre-handover procedure is completed.

It should be noted that there may be a plurality of neighboring cells of the current cell. In this case, the UE establishes, for the plurality of neighboring cells, a set that includes an SRB, a DRB, and related configuration parameters, and accordingly, a second eNB corresponding to each neighboring cell also establishes an SRB and a DRB corresponding to the UE.

S418. The UE sends a second measurement report to the first eNB.

The second measurement report (that is, a handover A3 event) is used to indicate that the results of measurement performed by the UE on the signal strength of the current cell and the signal strength of the neighboring cell meet a handover condition.

S419. The first eNB receives the second measurement report, and determines, based on the second measurement report, whether a handover procedure needs to be executed.

In this embodiment of the present invention, when a determining result of step S419 is yes, step S420 is performed; or when a determining result of step S419 is no, the first eNB sends, to the UE, an indication message indicating that no handover procedure is to be executed.

S420. The first eNB sends a handover instruction to the UE.

The handover instruction is used to instruct the UE to execute a handover procedure, to be specific, instruct the UE to switch a cell serving the UE from the current cell to the neighboring cell. The handover instruction may include a C-RNTI of the neighboring cell to which the UE needs to be handed over.

S421. The UE receives the handover instruction sent by the first eNB, and enables the SRB and the DRB in response to the handover instruction.

S422. The UE sends a cell handover complete indication message to the second eNB.

It should be noted that, before the first eNB sends the handover instruction to the UE, the first eNB further needs to send a key between the UE and the first eNB and a security algorithm between the UE and the first eNB to the second eNB.

It should be noted that, the pre-handover instruction may be further used to instruct the UE not to update the key and the security algorithm required for data communication between the UE and the second eNB, to be specific, the pre-handover instruction instructs the UE to use the key between the UE and the first eNB as the key to the SRB and the DRB and use the security algorithm between the UE and the first eNB as the security algorithm for the SRB and the DRB. In this case, the UE does not need to perform the operation of updating a security algorithm and a key used when the UE performs data communication with the second eNB in step S412.

In this embodiment of the present invention, the UE reports the measurement report to the first eNB when the results of measurement performed by the UE for the current cell and the neighboring cell meet a condition for entering the handover A3 event. Because the first eNB and the second eNB have previously completed the pre-handover interaction procedure, the first eNB directly sends the handover instruction to the UE, and the handover instruction only needs to indicate the neighboring cell to which the UE is to be handed over. After receiving the handover instruction, the UE may immediately enable the SRB and the DRB corresponding to the neighboring cell. In this way, a time of data transmission interruption is reduced, and user experience is enhanced.

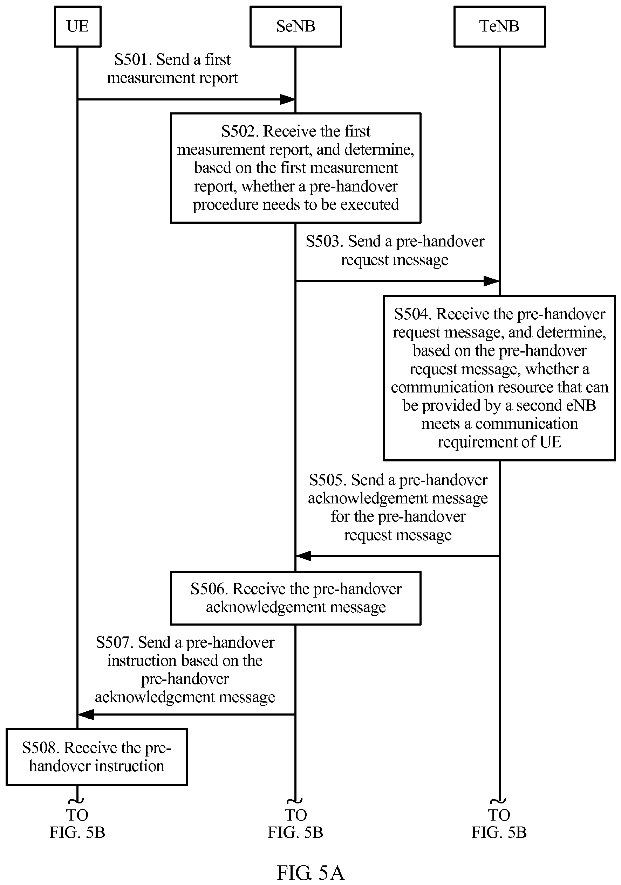

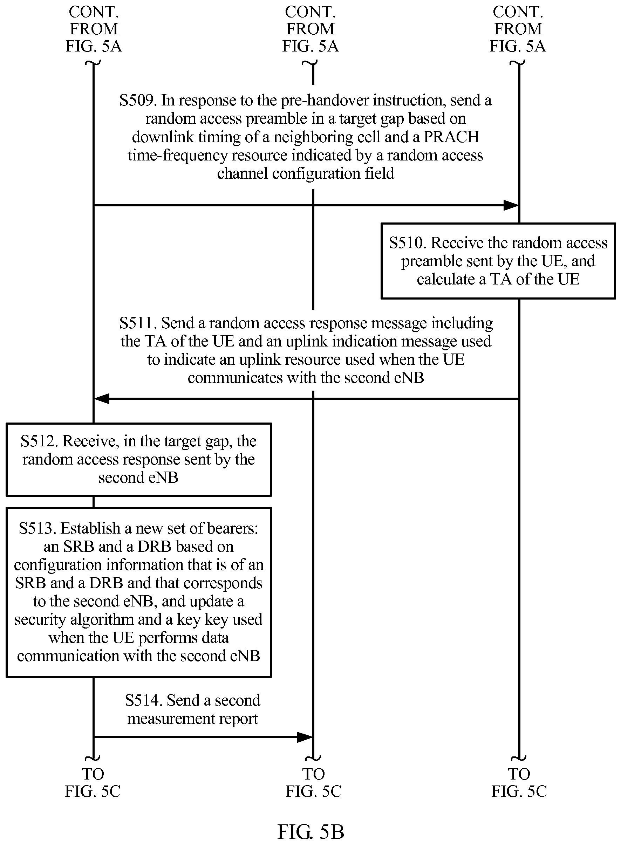

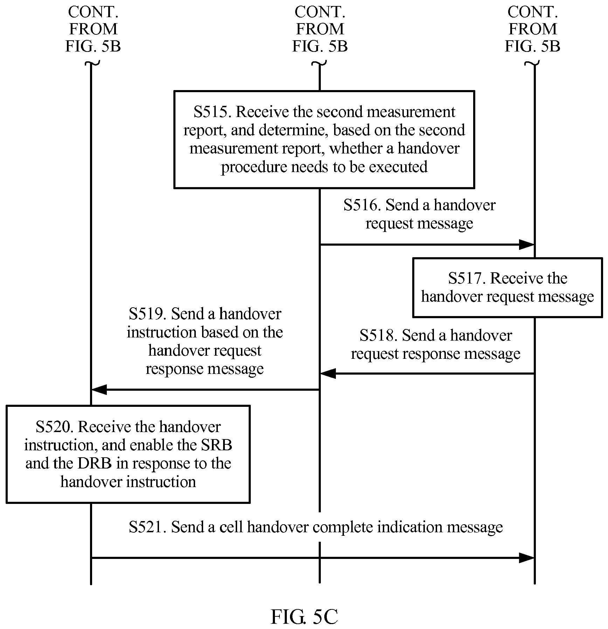

Referring to FIG. 5A, FIG. 5B, and FIG. 5C, FIG. 5A, FIG. 5B, and FIG. 5C are a schematic flowchart of still another cell handover method according to an embodiment of the present invention. In FIG. 5A, FIG. 5B, and FIG. 5C, descriptions are provided by using an example in which UE sends a random access preamble based on a PRACH configuration of a neighboring cell. Steps S501 to S506 correspond to S401 to S406 in FIG. 4A, and details are not described again in this embodiment of the present invention. A pre-handover acknowledgement message in step S505 may include an identifier of a time-frequency location of a random access preamble, allocated by a second eNB, in a PRACH time-frequency resource of a neighboring cell, an index identifier of the random access preamble, configuration information that is of an SRB and a DRB and that corresponds to the second eNB, and configuration information of a Media Access Control (MAC) layer. As shown in FIG. 5A, FIG. 5B, and FIG. 5C, the cell handover method may further include the following steps.

S507. A first eNB sends a pre-handover instruction to the UE based on a pre-handover acknowledgement message.

The pre-handover instruction may include an index identifier of a random access preamble allocated by the second eNB, configuration information that is of an SRB and a DRB and that corresponds to the second eNB, configuration information of a MAC layer, a PRACH time-frequency resource that is of a neighboring cell and that is used to send the random access preamble, and gap information of a target gap configured by the second eNB. The gap information of the target gap may include at least one of a start frame identifier of the target gap, a subframe identifier of the target gap, a time length of the target gap, and an interval of the target gap. The pre-handover instruction is used to instruct the UE to send, in the target gap based on downlink timing of the neighboring cell by using the PRACH time-frequency resource of the neighboring cell, the random access preamble indicated by the index identifier. A time of the PRACH time-frequency resource provided by the second eNB needs to be used as a reference for a time length of the target gap, so that a start time of the target gap is earlier than the time of the configured PRACH time-frequency resource. In addition, the time length of the target gap can ensure at least the following cases: The random access preamble can be sent, and a key and a security algorithm used when the UE performs data communication with the second eNB can be updated. Specifically, a dedicated random access channel configuration rach-ConfigDedicated field included in an information element (IE) of mobility control information MobilityConttolInfo in the pre-handover instruction indicates the PRACH time-frequency resource (which is a resource of the neighboring cell) used to send the random access preamble, a dedicated radio resource configuration information element radioResourceConfigDedicated IE includes the configuration information that is of the SRB and the DRB and that corresponds to the second eNB and the configuration information of the Media Access Control (MAC) layer, and a local security configuration information element security-ConfigHO IE may include an update instruction for the security algorithm and the key.

S508. The UE receives the pre-handover instruction.

S509. In response to the pre-handover instruction, the UE sends a random access preamble in a target gap based on downlink timing of a neighboring cell and a PRACH time-frequency resource indicated by a random access channel configuration field.

S510. The second eNB receives the random access preamble sent by the UE, and calculates a TA of the UE.

S511. The second eNB sends, to the UE, a random access response message including the TA of the UE and an uplink indication message used to indicate an uplink resource used when the UE communicates with the second eNB.

In this embodiment of the present invention, the target gap is a long gap, and in this case, the time length of the target gap can not only ensure that the UE sends the random access preamble but also ensure that the UE receives the random access response message returned by the second eNB. The UE suspends communication with a current cell in a process of sending the random access preamble to receiving the random access response message, and the UE resumes the communication with the current cell after receiving the random access response message.

It should be noted that when the target gap is a short gap (in this case, the time length of the target gap only allows the UE to send the random access preamble), the UE suspends communication with a current cell in the target gap, and the UE resumes the communication with the current cell after sending the random access preamble. Then the UE obtains, by using the first eNB, the timing advance of the UE and the uplink indication message used to indicate the uplink resource used when the UE communicates with the second eNB. To be specific, the second eNB sends, to the first eNB, the timing advance and the uplink indication message used to indicate the uplink resource used when the UE communicates with the second eNB, the first eNB sends the timing advance and the uplink indication message to the UE, and the UE receives the timing advance and the uplink indication message that are sent by the first eNB.

S512. The UE receives, in the target gap, the random access response message sent by the second eNB.

S513. The UE establishes a new set of bearers: an SRB and a DRB based on configuration information that is of an SRB and a DRB and that corresponds to the second eNB, and updates a security algorithm and a key used when the UE performs data communication with the second eNB.

S514. The UE sends a second measurement report to the first eNB.

The second measurement report (that is, a handover A3 event) is used to indicate that results of measurement performed by the UE on signal strength of the current cell and signal strength of the neighboring cell meet a handover condition.

S515. The first eNB receives the second measurement report, and determines, based on the second measurement report, whether a handover procedure needs to be executed.

In this embodiment of the present invention, when a determining result of step S515 is yes, step S516 is performed; or when a determining result of step S515 is no, the first eNB sends, to the UE, an indication message indicating that no handover procedure is to be executed.

S516. The first eNB sends a handover request message to the second eNB.

S517. The second eNB receives the handover request message.

S518. The second eNB sends a handover request response message to the first eNB based on the handover request message.

S519. The first eNB sends a handover instruction to the UE based on the handover request response message.

The handover instruction is used to instruct the UE to execute a handover procedure, to be specific, instruct the UE to switch a cell serving the UE from the current cell to the neighboring cell. The handover instruction may include a C-RNTI of the neighboring cell to which the UE needs to be handed over.

S520. The UE receives the handover instruction sent by the first eNB, and enables the SRB and the DRB in response to the handover instruction.

S521. The UE sends a cell handover complete indication message to the second eNB.

It should be noted that, before the first eNB sends the handover instruction to the UE, the first eNB further needs to send a key between the UE and the first eNB and a security algorithm between the UE and the first eNB to the second eNB.

It should be noted that, the pre-handover instruction may be further used to instruct the UE not to update the key and the security algorithm required for data communication between the UE and the second eNB, to be specific, the pre-handover instruction instructs the UE to use the key between the UE and the first eNB as the key to the SRB and the DRB and use the security algorithm between the UE and the first eNB as the security algorithm for the SRB and the DRB. In this case, the UE does not need to perform the operation of updating a security algorithm and a key used when the UE performs data communication with the second eNB in step S513.

In this embodiment of the present invention, the UE reports the measurement report to the first eNB when the results of measurement performed by the UE for the current cell and the neighboring cell meet a condition for entering the handover A3 event. Because the first eNB and the second eNB have previously completed a pre-handover interaction procedure, the first eNB directly sends the handover instruction to the UE, and the handover instruction only needs to indicate the neighboring cell to which the UE is to be handed over. After receiving the handover instruction, the UE may immediately enable the SRB and the DRB corresponding to the neighboring cell. In this way, a time of data transmission interruption is reduced, and user experience is enhanced.

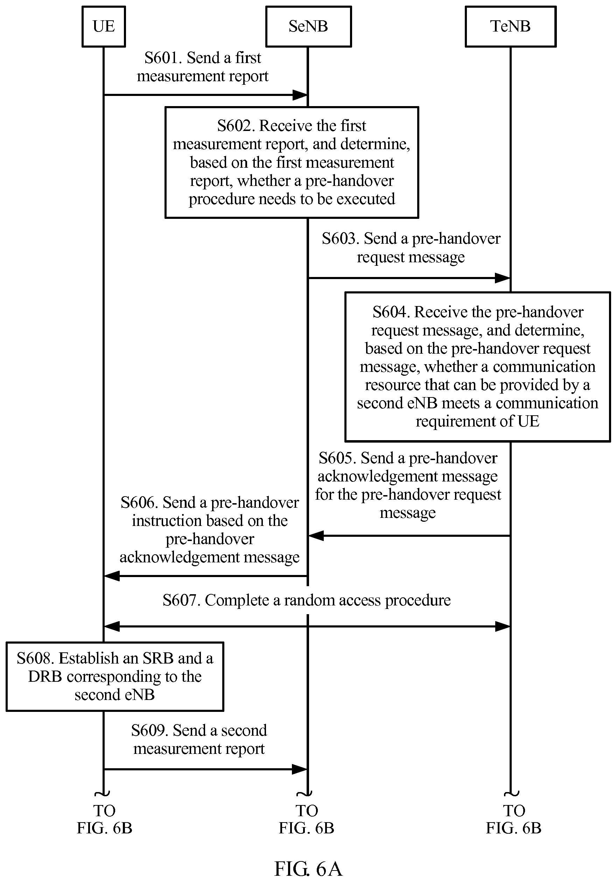

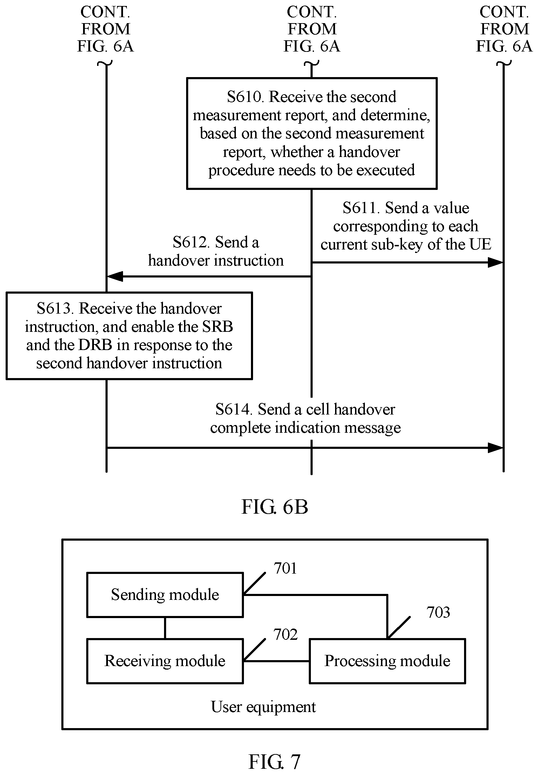

Referring to FIG. 6A and FIG. 6B, FIG. 6A and FIG. 6B are a schematic flowchart of still another cell handover method according to an embodiment of the present invention. In FIG. 6A and FIG. 6B, descriptions are provided by using an example in which UE sends a random access preamble based on a PRACH configuration of a neighboring cell. As shown in FIG. 6A and FIG. 6B, the cell handover method may include the following steps.

S601. UE sends a first measurement report to a first eNB (SeNB).

S602. The first eNB receives the first measurement report, and determines, based on the first measurement report, whether a pre-handover procedure needs to be executed.

In this embodiment of the present invention, when a determining result of step S602 is yes, step S603 is performed; or when a determining result of step S602 is no, the current procedure may be terminated.

S603. The first eNB sends a pre-handover request message to a second eNB.

S604. The second eNB receives the pre-handover request message sent by the first eNB, and determines, based on the pre-handover request message, whether a communication resource that can be provided by the second eNB meets a communication requirement of the UE.

In this embodiment of the present invention, when a determining result of step S604 is no, the second eNB sends, to the first eNB, an indication message indicating that the UE is not to perform a pre-handover operation for a neighboring cell of the second eNB; or when a determining result of step S604 is yes, step S605 is performed.

S605. The second eNB sends a pre-handover acknowledgement message for the pre-handover request message to the first eNB.

S606. The first eNB sends a pre-handover instruction to the UE.

The pre-handover instruction may include an index identifier of a random access preamble allocated by the second eNB, configuration information that is of an SRB and a DRB and that corresponds to the second eNB, configuration information of a MAC layer, a PRACH time-frequency resource that is of the neighboring cell and that is used to send the random access preamble, and gap information of a target gap configured by the second eNB. The gap information of the target gap may include at least one of a start frame identifier of the target gap, a subframe identifier of the target gap, a time length of the target gap, and an interval of the target gap. The pre-handover instruction is used to instruct the UE to send, in the target gap based on downlink timing of the neighboring cell by using the PRACH time-frequency resource of the neighboring cell, and instruct not to update the key and the security algorithm. A time of the PRACH time-frequency resource provided by the TeNB needs to be used as a reference for a time length of the target gap, so that a start time of the target gap is earlier than the time of the configured PRACH time-frequency resource. In addition, the time length of the target gap can ensure a random access procedure between the UE and the second eNB.

S607. The UE and the second eNB complete a random access procedure.

S608. The UE establishes an SRB and a DRB corresponding to the second eNB.

S609. The UE sends a second measurement report to the first eNB.

The second measurement report (that is, a handover A3 event) is used to indicate that results of measurement performed by the UE on signal strength of a current cell and signal strength of the neighboring cell meet a handover condition.

S610. The first eNB receives the second measurement report, and determines, based on the second measurement report, whether a handover procedure needs to be executed.

In this embodiment of the present invention, when a determining result of step S610 is yes, steps S611 and S612 are performed; or when a determining result of step S610 is no, the first eNB sends, to the UE, an indication message indicating that no handover procedure is to be executed.

S611. The first eNB sends a value corresponding to each current sub-key of the UE to the second eNB.

S612. The first eNB sends a handover instruction to the UE.

The handover instruction is used to instruct the UE to execute a handover procedure, to be specific, instruct the UE to switch a cell serving the UE from the current cell to the neighboring cell. The handover instruction includes a C-RNTI of the neighboring cell to which the UE needs to be handed over.

S613. The UE receives the handover instruction sent by the first eNB, and enables the SRB and the DRB in response to the handover instruction.

S614. The UE sends a cell handover complete indication message to the second eNB.

It should be noted that, for a current security configuration, a security algorithm may not change, but a key needs to be updated in each handover procedure. In a pre-handover scenario, there may be a plurality of pre-handover cells (that is, a plurality of neighboring cells) corresponding to the UE. A new key is required for each pre-handover cell, and key updating needs to follow a horizontal derivation rule or a vertical derivation rule. Unnecessary complex processes are caused in a key update process due to excessive pre-handover cells. Therefore, this embodiment of the present invention provides a method in which a key is not updated in a cell handover procedure. The first eNB may send a currently used key to the second eNB in the pre-handover request message, and the second eNB communicates with the UE by using the key. In addition, a key change indicator keyChangeIndicator in a security configuration information element in the pre-handover instruction may be extended to indicate, to the UE, whether the key for data communication between the UE and the second eNB is to be updated. To be specific, extended keyChangeIndicator is represented by 2 bits, that the most significant bit is 1 indicates that there is no update, that the most significant bit is 0 indicates that there is an update, and when the most significant bit is 0, that the least significant bit is 1 indicates that a new key is vertically derived, and that the least significant bit is 0 indicates that a new key is horizontally derived. When the first eNB sends the handover instruction to the UE, the first eNB also needs to send the value of each current sub-key to the second eNB, so that when the UE sends the cell handover complete indication message to the second eNB, the UE can continue to use the current key to complete security functions such as encryption and integrity protection.

In this embodiment of the present invention, the UE reports the measurement report to the first eNB when the results of measurement performed by the UE for the current cell and the neighboring cell meet a condition for entering the handover A3 event. Because the first eNB and the second eNB have previously completed the pre-handover interaction procedure, the first eNB directly sends the handover instruction to the UE, and the handover instruction only needs to indicate the neighboring cell to which the UE is to be handed over. After receiving the handover instruction, the UE may immediately enable the SRB and the DRB corresponding to the neighboring cell. In this way, a time of data transmission interruption is reduced, user experience is enhanced, and there is no need to update the security algorithm or the key.

Referring to FIG. 7, FIG. 7 is a schematic structural diagram of user equipment UE according to an embodiment of the present invention. The UE shown in FIG. 7 is configured to complete the cell handover method shown in FIG. 3. As shown in FIG. 7, the UE may include a sending module 701, a receiving module 702, and a processing module 703.

The sending module 701 is configured to send a first measurement report to a first eNB, where the first eNB is a base station to which a current cell serving the UE belongs, and the first measurement report is used to indicate that results of measurement performed by the UE on signal strength of the current cell and signal strength of a neighboring cell of the current cell meet a pre-handover condition. The pre-handover instruction includes an index identifier of a random access preamble and configuration information corresponding to a second eNB, the pre-handover instruction is used to instruct the UE to send, to the second eNB, the random access preamble indicated by the index identifier, and the second eNB is a base station to which the neighboring cell belongs.

The receiving module 702 is configured to receive a pre-handover instruction returned by the first eNB for the first measurement report. The pre-handover instruction is used to instruct the UE to send the random access preamble.

The sending module 701 is further configured to send the random access preamble in response to the pre-handover instruction received by the receiving module 702.

The processing module 703 is configured to establish, based on the configuration information in the pre-handover instruction, a radio bearer corresponding to the second eNB, where the radio bearer may include an SRB and a DRB.

The receiving module 702 is further configured to receive a timing advance and an uplink indication message used to indicate an uplink resource used when the UE performs data communication with the second eNB, where the timing advance is used by the UE to perform uplink synchronization with the second eNB.

The sending module 701 may be further configured to send a second measurement report (that is, a handover A3 event) to the first eNB, where the second measurement report is used to indicate that the results of measurement performed by the UE on the signal strength of the current cell and the signal strength of the neighboring cell meet a handover condition.

The receiving module 702 may be further configured to receive a handover instruction returned by the first eNB for the second measurement report, where the handover instruction is used to instruct the UE to switch a cell serving the UE from the current cell to the neighboring cell.

The processing module 703 may be further configured to enable the SRB and the DRB in response to the handover instruction received by the receiving module 702.

Specifically, after enabling the SRB and the DRB, the processing module triggers the sending module 701 to send a cell handover complete indication message to the second eNB.

The sending module 701 may be further configured to send the cell handover complete indication message to the second eNB.

In an optional embodiment, the pre-handover instruction is specifically used to instruct the UE to send, based on downlink timing, the random access preamble indicated by the index identifier, and the pre-handover instruction may further include a PRACH time-frequency resource used to send the random access preamble. A specific manner in which the sending module 701 sends the random access preamble in response to the pre-handover instruction may be: sending the random access preamble on the PRACH time-frequency resource based on the downlink timing in response to the pre-handover instruction.

In an optional implementation of the optional embodiment, the downlink timing is downlink timing of the current cell, the PRACH time-frequency resource is a resource of the current cell, and the random access preamble is allocated by the first eNB. In this case, the sending module 701 sends the random access preamble based on a PRACH configuration of the current cell.

In this optional manner, further optionally, a specific manner in which the receiving module 702 receives the timing advance and the uplink indication message used to indicate the uplink resource used when the UE communicates with the second eNB may be:

receiving the timing advance and the uplink indication message that are sent by the first eNB, where the uplink indication message is used to indicate the uplink resource used when the UE communicates with the second eNB, in other words, receiving the timing advance and the uplink indication message coming from the second eNB that are forwarded by the first eNB, where the timing advance is calculated by the second eNB, and the timing advance is equal to a sum of a downlink timing offset $\Delta T$ of the neighboring cell relative to the current cell that is received by the first eNB from the UE and a timing advance calculated by the second eNB when the second eNB receives the random access preamble.

In another optional implementation of the optional embodiment, the downlink timing is downlink timing of the neighboring cell, the PRACH time-frequency resource is a resource of the neighboring cell, and the random access preamble is allocated by the second eNB.

In the another optional implementation, further optionally, the pre-handover instruction may further include gap information of a target gap configured by the second eNB, and the gap information of the target gap may include at least one of a start frame identifier of the target gap, a subframe identifier of the target gap, a time length of the target gap, and an interval of the target gap. A specific manner in which the sending module sends the random access preamble on the PRACH time-frequency resource based on the downlink timing in response to the pre-handover instruction may be: in response to the pre-handover instruction, sending the random access preamble in the target gap based on the downlink timing by using the PRACH time-frequency resource.

The target gap may be a short gap that only allows the UE to send the random access preamble, or may be a long gap that allows the UE to send the random access preamble and also allows the UE to receive the timing advance and the uplink indication message. Data communication between the UE and the current cell is interrupted in an effective period of the target gap.

In the another optional implementation, still further optionally, a specific manner in which the receiving module 702 receives the timing advance and the uplink indication message used to indicate the uplink resource used when the UE communicates with the second eNB may be:

when the target gap is a long gap, receiving, in the target gap, a random access response message that is sent by the second eNB and that includes the timing advance and the uplink indication message used to indicate the uplink resource used when the UE communicates with the second eNB, where the timing advance is calculated by the second eNB when the second eNB receives the random access preamble; or

when the target gap is a short gap, receiving the timing advance and the uplink indication message that are sent by the first eNB, where the first eNB receives the timing advance and the uplink indication message that are sent by the second eNB, and the first eNB sends the timing advance and the uplink indication message to the UE.

The timing advance received by the UE is directly obtained through measurement by the second eNB, thereby improving accuracy of the timing advance and further improving accuracy of uplink synchronization between the UE and the second eNB in a subsequent data communication process.

Optionally, the pre-handover instruction may be further used to indicate that there is no need to update a security algorithm or a key, to be specific, the UE uses a key between the UE and the first eNB as a key to the SRB and the DRB and uses a security algorithm between the UE and the first eNB as a security algorithm for the SRB and the DRB; or may be used to instruct the UE to update a security algorithm and a key. Alternatively, the pre-handover instruction may be used to instruct to update a security algorithm and a key.

It can be learned that in this embodiment of the present invention, resource preparation can be performed in advance for a cell handover procedure, so that a time of data transmission interruption in the cell handover procedure can be reduced, and user experience can be enhanced.

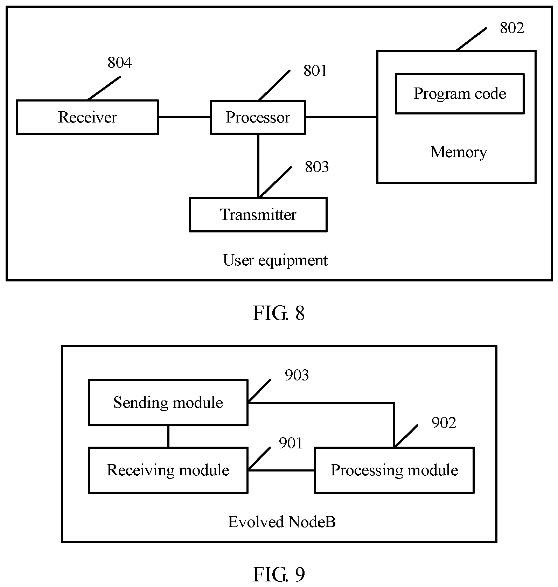

Referring to FIG. 8, FIG. 8 is a schematic structural diagram of another user equipment UE according to an embodiment of the present invention. The UE shown in FIG. 8 is configured to complete the cell handover method shown in FIG. 3. As shown in FIG. 8, the UE may include a processor 801, a memory 802, a transmitter 803, and a receiver 804. The memory 802 may be a high-speed RAM memory, or may be a nonvolatile memory, for example, at least one magnetic disk memory. Optionally, the memory 802 may be at least one storage apparatus located far away from the processor 801.

The transmitter 803 is configured to send a first measurement report to a first eNB, where the first eNB is a base station to which a current cell serving the UE belongs, and the first measurement report is used to indicate that results of measurement performed by the UE on signal strength of the current cell and signal strength of a neighboring cell of the current cell meet a pre-handover condition.

The receiver 804 is configured to receive a pre-handover instruction returned by the first eNB for the first measurement report, where the pre-handover instruction includes an index identifier of a random access preamble and configuration information corresponding to a second eNB, the pre-handover instruction is used to instruct the UE to send, to the second eNB, the random access preamble indicated by the index identifier, and the second eNB is a base station to which the neighboring cell of the current cell belongs.

Specifically, after receiving the pre-handover instruction, the receiver 804 sends the pre-handover instruction to the processor 801, and the processor 801 sends the pre-handover instruction to the transmitter 803, so as to trigger the transmitter 803 to respond to the pre-handover instruction.

The transmitter 803 may be further configured to send the random access preamble in response to the pre-handover instruction.

The memory 802 stores a group of program code, and the processor 801 is configured to invoke the program code stored in the memory 802, to perform the following operation:

establishing, based on the configuration information, a radio bearer corresponding to the second eNB, where the radio bearer includes an SRB and a DRB.

The receiver 804 may be further configured to receive a timing advance and an uplink indication message used to indicate an uplink resource used when the UE communicates with the second eNB, where the timing advance is used by the UE to perform uplink synchronization with the second eNB.

The transmitter 803 may be further configured to send a second measurement report to the first eNB, where the second measurement report is used to indicate that the results of measurement performed by the UE on the signal strength of the current cell and the signal strength of the neighboring cell meet a handover condition.

The receiver 804 may be further configured to receive a handover instruction returned by the first eNB for the second measurement report, where the handover instruction is used to instruct the UE to switch a cell serving the UE from the current cell to the neighboring cell.

The processor 801 is configured to invoke the program code stored in the memory 802, to further perform the following operation:

enabling the SRB and the DRB in response to the handover instruction.

The transmitter 803 may be further configured to send a cell handover complete indication message to the second eNB.

In an optional embodiment, the pre-handover instruction is specifically used to instruct the UE to send, based on downlink timing, the random access preamble indicated by the index identifier, and the pre-handover instruction may further include a physical random access channel PRACH time-frequency resource used to send the random access preamble. A specific manner in which the transmitter 803 sends the random access preamble in response to the pre-handover instruction is:

sending the random access preamble on the PRACH time-frequency resource based on the downlink timing in response to the pre-handover instruction.

In an optional implementation of the optional embodiment, the downlink timing is downlink timing of the current cell, the PRACH time-frequency resource is a resource of the current cell, and the random access preamble is allocated by the first eNB.

In this optional implementation, further optionally, a specific manner in which the receiver 804 receives the timing advance and the uplink indication message used to indicate the uplink resource used when the UE communicates with the second eNB may be:

receiving the timing advance and the uplink indication message used to indicate the uplink resource used when the UE communicates with the second eNB, where the timing advance and the uplink indication message are from the second eNB and are forwarded by the first eNB.

In another optional implementation of the optional embodiment, the downlink timing is downlink timing of the neighboring cell, the PRACH time-frequency resource is a resource of the neighboring cell, and the random access preamble is allocated by the second eNB.

In the another optional implementation, further optionally, the pre-handover instruction may further include gap information of a target gap configured by the second eNB, and the gap information of the target gap includes at least one of a start frame identifier of the target gap, a subframe identifier of the target gap, a time length of the target gap, and an interval of the target gap. The target gap may be a long gap or a short gap. A specific manner in which the transmitter 803 sends the random access preamble in response to the pre-handover instruction may be:

in response to the pre-handover instruction, sending the random access preamble in the target gap based on the downlink timing by using the PRACH time-frequency resource.

Still further optionally, a specific manner in which the receiver 804 receives the timing advance and the uplink indication message used to indicate the uplink resource used when the UE communicates with the second eNB may be:

when the target gap is a long gap, receiving, in the target gap, a random access response message that is sent by the second eNB and that includes the timing advance and the uplink indication message used to indicate the uplink resource used when the UE communicates with the second eNB; or

when the target gap is a short gap, receiving the timing advance and the uplink indication message from the second eNB that are sent by the first eNB.

The timing advance is directly calculated by the second eNB when the second eNB receives the random access preamble.

Optionally, the pre-handover instruction may be further used to indicate that there is no need to update a security algorithm or a key, to be specific, instruct the UE to use a key between the UE and the first eNB as a key to the SRB and the DRB and use a security algorithm between the UE and the first eNB as a security algorithm for the SRB and the DRB; or may be used to instruct the UE to update a security algorithm and a key. Alternatively, the pre-handover instruction may be used to instruct to update a security algorithm and a key.

It can be learned that in this embodiment of the present invention, resource preparation can be performed in advance for a cell handover procedure, so that a time of data transmission interruption in the cell handover procedure can be reduced, and user experience can be enhanced.

FIG. 9 is a schematic structural diagram of an evolved NodeB eNB according to an embodiment of the present invention. The eNB shown in FIG. 9 is a base station to which a current cell serving UE belongs, and the UE is the UE shown in FIG. 7. As shown in FIG. 9, the eNB may include a receiving module 901, a processing module 902, and a sending module 903.

The receiving module 901 is configured to receive a first measurement report sent by the UE, where the first measurement report is used to indicate that results of measurement performed by the UE on signal strength of the current cell and signal strength of a neighboring cell of the current cell meet a pre-handover condition.

The processing module 902 is configured to determine, based on the first measurement report, whether a pre-handover procedure needs to be executed.

The sending module 903 is configured to: when a determining result of the processing module 902 is yes, send a pre-handover request message to a second eNB, where the pre-handover request message is used to request the second eNB to indicate whether the UE is to execute a pre-handover procedure, and the second eNB is a base station to which the neighboring cell belongs.

The receiving module 901 may be further configured to receive a pre-handover acknowledgement message returned by the second eNB in response to the pre-handover request message, where the pre-handover acknowledgement message is used to trigger the eNB shown in FIG. 9 to send a pre-handover instruction to the UE.

The sending module 903 may be further configured to send the pre-handover instruction to the UE based on the pre-handover acknowledgement message, where the pre-handover instruction may include an index identifier of a random access preamble and configuration information that is of an SRB and a DRB and that corresponds to the second eNB, and the pre-handover instruction is used to instruct the UE to send the random access preamble indicated by the index identifier.

The receiving module 901 may be further configured to receive a second measurement report sent by the UE, where the second measurement report is used to indicate that the results of measurement performed by the UE on the signal strength of the current cell and the signal strength of the neighboring cell meet a handover condition.

The sending module 903 may be further configured to send a handover instruction for the second measurement report to the UE, where the handover instruction is used to instruct the UE to switch a cell serving the UE from the current cell to the neighboring cell.

In an optional embodiment, the pre-handover instruction is specifically used to instruct the UE to send, based on downlink timing, the random access preamble corresponding to the index identifier, and the pre-handover instruction may further include a PRACH time-frequency resource used to send the random access preamble.

In an optional implementation of the optional embodiment, the downlink timing is downlink timing of the current cell, the PRACH time-frequency resource is a resource of the current cell, and the random access preamble is allocated by the eNB shown in FIG. 9. The sending module 903 may be further configured to send an identifier of a time-frequency location of the random access preamble in the PRACH time-frequency resource and the index identifier to the second eNB, so that the second eNB monitors, based on the identifier of the time-frequency location, the random access preamble indicated by the index identifier.

In this optional implementation, further optionally, the receiving module 901 may be further configured to receive a timing advance and an uplink indication message that are sent by the second eNB, where the uplink indication message is used to indicate an uplink resource used when the UE communicates with the second eNB, and the timing advance is used by the UE to perform uplink synchronization with the second eNB. The sending module 903 may be further configured to send the timing advance and the uplink indication message to the UE.

In another optional implementation of the optional embodiment, the downlink timing is downlink timing of the neighboring cell, the PRACH time-frequency resource is a resource of the neighboring cell, the random access preamble is allocated by the second eNB, and the pre-handover acknowledgement message may include an identifier of a time-frequency location of the random access preamble in the PRACH time-frequency resource, the index identifier, and the configuration information that is of the SRB and the DRB and that corresponds to the second eNB.

In the another optional implementation, further optionally, the pre-handover instruction may further include gap information of a target gap configured by the second eNB, and the gap information of the target gap may include at least one of a start frame identifier of the target gap, a subframe identifier of the target gap, a time length of the target gap, and an interval of the target gap. The target gap may be a long gap or a short gap.

Still further optionally, when the target gap is a short gap, the receiving module 901 may be further configured to receive the timing advance and the uplink indication message that are sent by the second eNB, where the uplink indication message is used to indicate the uplink resource used when the UE communicates with the second eNB, the timing advance is directly calculated by the second eNB when the second eNB receives the random access preamble sent by the UE, and the timing advance is used by the UE to perform uplink synchronization with the second eNB.

The sending module 903 may be further configured to send the timing advance and the uplink indication message to the UE.

Optionally, the pre-handover instruction may be further used to indicate that there is no need to update a security algorithm or a key, to be specific, instruct the UE to use a key between the UE and the eNB shown in FIG. 9 as a key to the SRB and the DRB and use a security algorithm between the UE and the eNB shown in FIG. 9 as a security algorithm for the SRB and the DRB; or may be used to instruct the UE to update a security algorithm and a key.

The sending module 903 may be further configured to send the key between the UE and the eNB shown in FIG. 9 and the security algorithm between the UE and the eNB shown in FIG. 9 to the second eNB.

It can be learned that in this embodiment of the present invention, resource preparation can be performed in advance for a cell handover procedure, so that a time of data transmission interruption in the cell handover procedure can be reduced, and user experience can be enhanced.

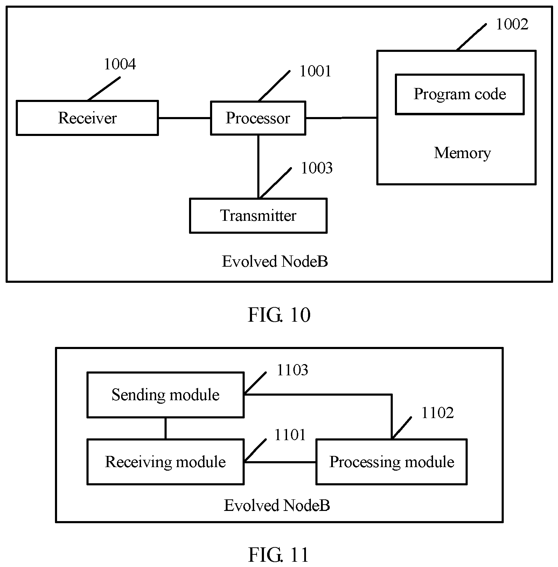

Referring to FIG. 10, FIG. 10 is a schematic structural diagram of another evolved NodeB eNB according to an embodiment of the present invention. The eNB shown in FIG. 10 is a base station to which a current cell serving UE belongs, and the UE is the UE shown in FIG. 7. As shown in FIG. 10, the eNB may include a processor 1001, a memory 1002, a transmitter 1003, and a receiver 1004. The memory 1002 may be a high-speed RAM memory, or may be a nonvolatile memory, for example, at least one magnetic disk memory. Optionally, the memory 1002 may be at least one storage apparatus located far away from the processor 1001.

The receiver 1004 is configured to receive a first measurement report sent by the UE, where the first measurement report is used to indicate that results of measurement performed by the UE on signal strength of the current cell and signal strength of a neighboring cell of the current cell meet a pre-handover condition.

The processor 1001 is configured to invoke program code stored in the memory 1002, to perform the following operation:

determining, based on the first measurement report, whether a pre-handover procedure needs to be executed.

The transmitter 1003 is configured to: when a determining result of the processor 1001 is yes, send a pre-handover request message to a second eNB, where the pre-handover request message is used to request the second eNB to indicate whether the UE is to execute a pre-handover procedure.

The receiver 1004 may be further configured to receive a pre-handover acknowledgement message returned by the second eNB in response to the pre-handover request message, where the pre-handover acknowledgement message is used to trigger the eNB shown in FIG. 10 to send a pre-handover instruction to the UE, and the second eNB is a base station to which the neighboring cell belongs.

Specifically, after receiving the pre-handover acknowledgement message, the receiver 1004 sends the pre-handover acknowledgement message to the processor 1001, and the processor 1001 sends the pre-handover acknowledgement message to the transmitter 1003, so as to trigger the transmitter 1003 to perform a corresponding operation.

The transmitter 1003 may be further configured to send the pre-handover instruction to the UE based on the pre-handover acknowledgement message, where the pre-handover instruction may include an index identifier of a random access preamble and configuration information that is of a signaling radio bearer and a data radio bearer and that corresponds to the second eNB, and the pre-handover instruction is used to instruct the UE to send the random access preamble indicated by the index identifier.

The receiver 1004 may be further configured to receive a second measurement report sent by the UE, where the second measurement report is used to indicate that the results of measurement performed by the UE on the signal strength of the current cell and the signal strength of the neighboring cell meet a handover condition.

The transmitter 1003 may be further configured to send a handover instruction for the second measurement report to the UE, where the handover instruction is used to instruct the UE to switch a cell serving the UE from the current cell to the neighboring cell.

In an optional embodiment, the pre-handover instruction is specifically used to instruct the UE to send, based on downlink timing, the random access preamble corresponding to the index identifier, and the pre-handover instruction may further include a PRACH time-frequency resource used to send the random access preamble.

In an optional implementation of the optional embodiment, the downlink timing is downlink timing of the current cell, the PRACH time-frequency resource is a resource of the current cell, and the random access preamble is allocated by the eNB shown in FIG. 10. The transmitter 1003 may be further configured to send an identifier of a time-frequency location of the random access preamble in the PRACH time-frequency resource and the index identifier to the second eNB, so that the second eNB monitors, based on the identifier of the time-frequency location, the random access preamble indicated by the index identifier.

In this optional implementation, further optionally, the receiver 1004 may be further configured to receive a timing advance and an uplink indication message that are sent by the second eNB, where the uplink indication message is used to indicate an uplink resource used when the UE communicates with the second eNB, and the timing advance is used by the UE to perform uplink synchronization with the second eNB. The transmitter 1003 may be further configured to send the timing advance and the uplink indication message to the UE.

In another optional implementation of the optional embodiment, the downlink timing is downlink timing of the neighboring cell, the PRACH time-frequency resource is a resource of the neighboring cell, the random access preamble is allocated by the second eNB, and the pre-handover acknowledgement message may include an identifier of a time-frequency location of the random access preamble in the PRACH time-frequency resource, the index identifier, and the configuration information that is of the SRB and the DRB and that corresponds to the second eNB.

In the another optional implementation, further optionally, the pre-handover instruction may further include gap information of a target gap configured by the second eNB, and the gap information of the target gap may include at least one of a start frame identifier of the target gap, a subframe identifier of the target gap, a time length of the target gap, and an interval of the target gap. The target gap may be a long gap or a short gap.

Still further optionally, when the target gap is a short gap, the receiver 1004 may be further configured to receive the timing advance and the uplink indication message that are sent by the second eNB, where the uplink indication message is used to indicate the uplink resource used when the UE communicates with the second eNB, the timing advance is directly calculated by the second eNB when the second eNB receives the random access preamble sent by the UE, and the timing advance is used by the UE to perform uplink synchronization with the second eNB.

The transmitter 1003 may be further configured to send the timing advance and the uplink indication message to the UE.

Optionally, the pre-handover instruction may be further used to indicate that there is no need to update a security algorithm or a key, to be specific, instruct the UE to use a key between the UE and the eNB shown in FIG. 10 as a key to a radio bearer and use a security algorithm between the UE and the eNB shown in FIG. 10 as a security algorithm for the radio bearer; or may be used to instruct the UE to update a security algorithm and a key. The radio bearer may include an SRB and a DRB, and is a radio bearer that corresponds to the second eNB and that is established by the UE based on the configuration information.

The transmitter 1003 may be further configured to send the key between the UE and the eNB shown in FIG. 10 and the security algorithm between the UE and the eNB shown in FIG. 10 to the second eNB.

It can be learned that in this embodiment of the present invention, resource preparation can be performed in advance for a cell handover procedure, so that a time of data transmission interruption in the cell handover procedure can be reduced, and user experience can be enhanced.

Referring to FIG. 11, FIG. 11 is a schematic structural diagram of still another evolved NodeB eNB according to an embodiment of the present invention. The eNB shown in FIG. 11 is a base station to which a neighboring cell of a current cell serving UE belongs, the current cell is deployed in coverage of a first eNB, a structure of the UE may be shown in FIG. 7, and a structure of the first eNB may be shown in FIG. 9. As shown in FIG. 11, the eNB may include a receiving module 1101, a processing module 1102, and a sending module 1103.

The receiving module 1101 is configured to receive a pre-handover request message sent by the first eNB, where the pre-handover request message is used to request the eNB shown in FIG. 11 to indicate whether the UE is to execute a pre-handover procedure.

The processing module 1102 is configured to determine, based on the pre-handover request message, whether a communication resource provided by the eNB meets a communication requirement of the UE.

The sending module 1103 may be further configured to: when a determining result of the processing module 1102 is yes, send a pre-handover acknowledgement message for the pre-handover request message to the first eNB, where the pre-handover acknowledgement message is used to trigger the first eNB to send a pre-handover instruction to the UE, the pre-handover instruction includes an index identifier of a random access preamble and configuration information corresponding to the eNB shown in FIG. 11, and the pre-handover instruction is used to instruct the UE to send the random access preamble indicated by the index identifier.

The receiving module 1101 may be further configured to receive the random access preamble sent by the UE.

The sending module 1103 may be further configured to send, to the UE, a timing advance and an uplink indication message used to indicate an uplink resource used when the UE communicates with the eNB shown in FIG. 11, where the timing advance is used by the UE to perform uplink synchronization with the eNB shown in FIG. 11.

The receiving module 1101 may be further configured to receive a cell handover complete indication message sent by the UE.

In an optional embodiment, the pre-handover instruction is specifically used to instruct the UE to send, based on downlink timing, the random access preamble corresponding to the index identifier, and the pre-handover instruction may further include a PRACH time-frequency resource used to send the random access preamble.

In an optional implementation of the optional embodiment, the downlink timing is downlink timing of the current cell, the PRACH time-frequency resource is a resource of the current cell, and the random access preamble is allocated by the first eNB. The receiving module 1101 may be further configured to receive an identifier of a time-frequency location of the random access preamble in the PRACH time-frequency resource and the index identifier, where the identifier of the time-frequency location and the index identifier are sent by the first eNB. The receiving module 1101 is specifically configured to receive, on the corresponding PRACH time-frequency resource based on the identifier of the time-frequency location, the random access preamble indicated by the index identifier.

In this optional implementation, further optionally, a specific manner in which the sending module 1103 sends, to the UE, the timing advance and the uplink indication message used to indicate the uplink resource used when the UE communicates with the eNB shown in FIG. 11 may be:

sending, to the first eNB, the time advance and the uplink indication message used to indicate the uplink resource used when the UE communicates with the eNB shown in FIG. 11, so that the first eNB sends the timing advance and the uplink indication message to the UE, where the timing advance is equal to a sum of a downlink timing offset of the neighboring cell relative to the current cell that is sent by the UE by using the first eNB and a timing advance calculated by the eNB shown in FIG. 11 when the eNB shown in FIG. 11 receives the random access preamble sent by the UE.

In another optional implementation of the optional embodiment, the downlink timing is downlink timing of the neighboring cell, the PRACH time-frequency resource is a resource of the neighboring cell, the random access preamble is allocated by the eNB shown in FIG. 11, and the pre-handover acknowledgement message may include an identifier of a time-frequency location of the random access preamble in the PRACH time-frequency resource, the index identifier, and the configuration information.

In the another optional implementation, further optionally, the pre-handover instruction may further include gap information of a target gap configured by the eNB shown in FIG. 11, and the gap information of the target gap may include at least one of a start frame identifier of the target gap, a subframe identifier of the target gap, a time length of the target gap, and an interval of the target gap. The target gap may be a long gap or a short gap.

Still further optionally, a specific manner in which the sending module 1103 sends, to the UE, the timing advance and the uplink indication message used to indicate the uplink resource used when the UE communicates with the eNB shown in FIG. 11 may be:

when the target gap is a short gap, sending, to the first eNB, the timing advance and the uplink indication message used to indicate the uplink resource used when the UE communicates with the eNB shown in FIG. 11, so that the first eNB sends the timing advance and the uplink indication message to the UE; or

when the target gap is a long gap, directly sending the timing advance and the uplink indication message to the UE.

The timing advance is directly calculated by the eNB shown in FIG. 11 when the eNB shown in FIG. 11 receives the random access preamble.

Optionally, the pre-handover instruction may be further used to indicate that there is no need to update a security algorithm or a key, to be specific, instruct the UE to use a key between the UE and the first eNB as a key to a radio bearer and use a security algorithm between the UE and the first eNB as a security algorithm for the radio bearer; or may be used to instruct the UE to update a security algorithm and a key. The radio bearer may include an SRB and a DRB, and is a radio bearer that corresponds to the eNB shown in FIG. 11 and that is established by the UE based on the configuration information.

The receiving module 1101 may be further configured to receive the key between the UE and the first eNB and the security algorithm between the UE and the first eNB that are sent by the first eNB.

It can be learned that in this embodiment of the present invention, resource preparation can be performed in advance for a cell handover procedure, so that a time of data transmission interruption in the cell handover procedure can be reduced, and user experience can be enhanced.

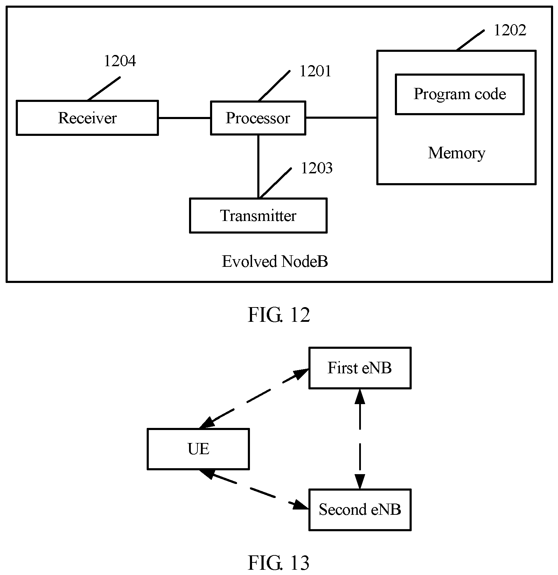

Referring to FIG. 12, FIG. 12 is a schematic structural diagram of still another evolved NodeB eNB according to an embodiment of the present invention. The eNB shown in FIG. 12 is a base station to which a neighboring cell of a current cell serving UE belongs, the current cell is deployed in coverage of a first eNB, a structure of the UE may be shown in FIG. 8, and a structure of the first eNB may be shown in FIG. 10. As shown in FIG. 12, the eNB may include a processor 1201, a memory 1202, a transmitter 1203, and a receiver 1204. The memory 1202 may be a high-speed RAM memory, or may be a nonvolatile memory, for example, at least one magnetic disk memory. Optionally, the memory 1202 may be at least one storage apparatus located far away from the processor 1201.

The receiver 1204 is configured to receive a pre-handover request message sent by the first eNB, where the pre-handover request message is used to request the eNB shown in FIG. 12 to indicate whether the UE is to execute a pre-handover procedure.

The memory 1202 stores a group of program code, and the processor 1201 is configured to invoke the program code stored in the memory 1202, to perform the following operation:
determining, based on the pre-handover request message, whether a communication resource provided by the eNB meets a communication requirement of the UE.

The transmitter 1203 is configured to: when a determining result of the processor 1201 is yes, send a pre-handover acknowledgement message for the pre-handover request message to the first eNB, where the pre-handover acknowledgement message is used to trigger the first eNB to send a pre-handover instruction to the UE, the pre-handover instruction may include an index identifier of a random access preamble and configuration information corresponding to the eNB shown in FIG. 12, and the pre-handover instruction is used to instruct the UE to send the random access preamble indicated by the index identifier.

The receiver 1204 may be further configured to receive the random access preamble sent by the UE.

The transmitter 1203 may be further configured to send, to the UE, a timing advance and an uplink indication message used to indicate an uplink resource used when the UE communicates with the eNB shown in FIG. 12, where the timing advance is used by the UE to perform uplink synchronization with the eNB shown in FIG. 12.

The receiver 1204 may be further configured to receive a cell handover complete indication message sent by the UE.

In an optional embodiment, the pre-handover instruction is specifically used to instruct the UE to send, based on downlink timing, the random access preamble corresponding to the index identifier, and the pre-handover instruction may further include a PRACH time-frequency resource used to send the random access preamble.

In an optional implementation of the optional embodiment, the downlink timing is downlink timing of the current cell, the PRACH time-frequency resource is a resource of the current cell, and the random access preamble is allocated by the first eNB. The receiver 1204 may be further configured to receive an identifier of a time-frequency location of the random access preamble in the PRACH time-frequency resource and the index identifier, where the identifier of the time-frequency location and the index identifier are sent by the first eNB.

In this optional implementation, further optionally, a specific manner in which the transmitter 1203 sends, to the UE, the timing advance and the uplink indication message used to indicate the uplink resource used when the UE communicates with the eNB shown in FIG. 12 may be:

sending, to the first eNB, the timing advance and the uplink indication message used to indicate the uplink resource used when the UE communicates with the eNB shown in FIG. 12, so that the first eNB sends the timing advance and the uplink indication message to the UE.

In another optional implementation of the optional embodiment, the downlink timing is downlink timing of the neighboring cell, the PRACH time-frequency resource is a resource of the neighboring cell, the random access preamble is allocated by the eNB shown in FIG. 12, and the pre-handover acknowledgement message may include an identifier of a time-frequency location of the random access preamble in the PRACH time-frequency resource, the index identifier, and the configuration information.

In the another optional implementation, further optionally, the pre-handover instruction may further include gap information of a target gap configured by the eNB shown in FIG. 12, and the gap information of the target gap may include at least one of a start frame identifier of the target gap, a subframe identifier of the target gap, a time length of the target gap, and an interval of the target gap. The target gap may be a long gap or a short gap.

Still further optionally, a specific manner in which the transmitter 1203 sends, to the UE, the timing advance and the uplink indication message used to indicate the uplink resource used when the UE communicates with the eNB shown in FIG. 12 may be:

when the target gap is a short gap, sending, to the first eNB, the timing advance and the uplink indication message used to indicate the uplink resource used when the UE communicates with the eNB shown in FIG. 12, so that the first eNB sends the timing advance and the uplink indication message to the UE; or
when the target gap is a long gap, directly sending the timing advance and the uplink indication message to the UE.

The timing advance is directly calculated by the eNB shown in FIG. 12 when the eNB shown in FIG. 12 receives the random access preamble.

Optionally, the pre-handover instruction may be further used to indicate that there is no need to update a security algorithm or a key, to be specific, instruct the UE to use a key between the UE and the first eNB as a key to a radio bearer and use a security algorithm between the UE and the first eNB as a security algorithm for the radio bearer; or may be used to instruct the UE to update a security algorithm and a key. The radio bearer may include an SRB and a DRB, and is a radio bearer that corresponds to the eNB shown in FIG. 12 and that is established by the UE based on the configuration information.

The receiver 1204 may be further configured to receive the key between the UE and the first eNB and the security algorithm between the UE and the first eNB that are sent by the first eNB.

It can be learned that in this embodiment of the present invention, resource preparation can be performed in advance for a cell handover procedure, so that a time of data transmission interruption in the cell handover procedure can be reduced, and user experience can be enhanced.

Referring to FIG. 13, FIG. 13 is a schematic structural diagram of a cell handover system according to an embodiment of the present invention. As shown in FIG. 13, the system may include UE, a first eNB, and a second eNB, the first eNB is a base station to which a current cell serving the UE belongs, and the second eNB is a base station to which a neighboring cell of the current cell belongs.

The UE is configured to send a first measurement report to the first eNB, where the first measurement report is used to indicate that the current cell and the neighboring cell meet a pre-handover condition. Specifically, the first measurement report is used to indicate that results of measurement performed by the UE on signal strength of the current cell and signal strength of the neighboring cell meet the pre-handover condition.

The first eNB is configured to: determine, based on the first measurement report, whether a pre-handover procedure needs to be executed, and when a determining result is yes, send a pre-handover request message to the second eNB, where the pre-handover request message is used to request the second eNB to indicate whether the UE is to execute a pre-handover procedure.

The second eNB is configured to: determine, based on the pre-handover request message, whether a communication resource provided by the second eNB meets a communication requirement of the UE, and when a determining result is yes, send a pre-handover acknowledgement message for the pre-handover request message to the first eNB, where the pre-handover acknowledgement message is used to trigger the first eNB to send a pre-handover instruction to the UE, the pre-handover instruction includes an index identifier of a random access preamble and configuration information corresponding to the second eNB, and the pre-handover instruction is used to instruct the UE to send the random access preamble indicated by the index identifier.

The first eNB is further configured to send the pre-handover instruction to the UE based on the pre-handover acknowledgement message.

The UE is further configured to: send the random access preamble in response to the pre-handover instruction, and establish, based on the configuration information, a radio bearer corresponding to the second eNB. The radio bearer may include a signaling radio bearer and a data radio bearer.

The second eNB is further configured to: receive the random access preamble, and send, to the UE, a timing advance and an uplink indication message used to indicate an uplink resource used when the UE communicates with the second eNB, and the timing advance is used by the UE to perform uplink synchronization with the second eNB.

The UE is further configured to send a second measurement report to the first eNB, where the second measurement report is used to indicate that the current cell and the neighboring cell meet a handover condition. Specifically, the second measurement report is used to indicate that the results of measurement performed by the UE on the signal strength of the current cell and the signal strength of the neighboring cell meet the handover condition.

The first eNB is further configured to send a handover instruction for the second measurement report to the UE, where the handover instruction is used to instruct the UE to switch a cell serving the UE from the current cell to the neighboring cell.

The UE is further configured to: enable the signaling radio bearer and the data radio bearer in response to the handover instruction, and send a cell handover complete indication message to the second eNB.

The second eNB is further configured to receive the cell handover complete indication message.

In an optional embodiment, the pre-handover instruction is specifically used to instruct the UE to send, based on downlink timing, the random access preamble indicated by the index identifier, and the pre-handover instruction further includes a physical random access channel PRACH time-frequency resource used to send the random access preamble.

In an optional implementation of the optional embodiment, the downlink timing is downlink timing of the current cell, the PRACH time-frequency resource is a resource of the current cell, and the random access preamble is allocated by the first eNB.

The first eNB is further configured to send an identifier of a time-frequency location of the random access preamble in the PRACH time-frequency resource and the index identifier to the second eNB.

The second eNB is further configured to receive the identifier of the time-frequency location of the random access preamble in the PRACH time-frequency resource and the index identifier.

In this optional implementation, further optionally, a specific manner in which the second eNB sends, to the UE, the timing advance and the uplink indication message used to indicate the uplink resource used when the UE communicates with the second eNB may be:

sending, to the first eNB, the timing advance and the uplink indication message used to indicate the uplink resource used when the UE communicates with the second eNB, so that the first eNB sends the timing advance and the uplink indication message to the UE.

In another optional implementation of the optional embodiment, the downlink timing is downlink timing of the neighboring cell, the PRACH time-frequency resource is a resource of the neighboring cell, the random access preamble is allocated by the second eNB, and the pre-handover acknowledgement message may include an identifier of a time-frequency location of the random access preamble in the PRACH time-frequency resource, the index identifier, and the configuration information.

In the another optional implementation, further optionally, the pre-handover instruction may further include gap information of a target gap configured by the second eNB, and the gap information of the target gap may include at least one of a start frame identifier of the target gap, a subframe identifier of the target gap, a time length of the target gap, and an interval of the target gap. The target gap may be a long gap or a short gap.

Still further optionally, a specific manner in which the second eNB sends, to the UE, the timing advance and the uplink indication message used to indicate the uplink resource used when the UE communicates with the second eNB may be:

when the target gap is a short gap, sending, to the first eNB, the timing advance and the uplink indication message used to indicate the uplink resource used when the UE communicates with the second eNB, so that the first eNB sends the timing advance and the uplink indication message to the UE; or

when the target gap is a long gap, directly sending the timing advance and the uplink indication message to the UE.

The timing advance is directly calculated by the second eNB when the second eNB receives the random access preamble.

Optionally, the pre-handover instruction may be further used to indicate that there is no need to update a security algorithm or a key, to be specific, instruct the UE to use a key between the UE and the first eNB as a key to the SRB and the DRB and use a security algorithm between the UE and the first eNB as a security algorithm for the SRB and the DRB; or may be used to instruct the UE to update a security algorithm and a key.

The first eNB is further configured to send the key between the UE and the first eNB and the security algorithm between the UE and the first eNB to the second eNB.

It can be learned that in this embodiment of the present invention, resource preparation can be performed in advance for a cell handover procedure, so that a time of data transmission interruption in the cell handover procedure can be reduced, and user experience can be enhanced.

It should be noted that, in the foregoing embodiments, the description of each embodiment has respective focuses. For a part that is not described in detail in an embodiment, refer to related descriptions in other embodiments. In addition, a person skilled in the art should also appreciate that all the embodiments described in the specification are example embodiments, and the actions and modules are not necessarily mandatory to the present invention.

A sequence of the steps of the method in the embodiments of the present invention may be adjusted, and steps may be combined or removed as actually required.

The modules in the user equipment in the embodiments of the present invention may be combined, divided, or deleted as actually required.

The modules in the evolved NodeB in the embodiments of the present invention may be combined, divided, or deleted as actually required.

The module in the embodiments of the present invention may be implemented by a universal integrated circuit, such as a CPU (central processing unit) or an ASIC (application-specific integrated circuit).

A person of ordinary skill in the art may understand that all or some of the processes of the methods in the embodiments may be implemented by a computer program instructing relevant hardware. The program may be stored in a computer readable storage medium. When the program runs, the processes of the methods in the embodiments are performed. The foregoing storage medium may be a magnetic disk, an optical disc, a read-only memory (ROM), a random access memory (RAM), or the like.

The cell handover method and system, and the device provided in the embodiments of the present invention are described in detail above. The principle and implementations of the present invention are described by using specific examples in the specification. The description about the embodiments is merely provided to help understand the method and core ideas of the present invention. In addition, a person of ordinary skill in the art can make modifications to the present invention in terms of the specific implementations and application scopes according to the ideas of the present invention. Therefore, the content of the specification shall not be construed as a limit to the present invention.

**Claims**

1.  A cell handover method, comprising:

    sending, by user equipment, UE, a first measurement report to a first evolved NodeB, eNB, wherein the first eNB is a base station to which a current cell serving the UE belongs, and the first measurement report is used to indicate that the current cell and a neighboring cell of the current cell meet a pre-handover condition;
    receiving, by the UE, a pre-handover instruction returned by the first eNB for the first measurement report, wherein the pre-handover instruction comprises an index identifier and configuration information corresponding to a second eNB;
    sending, by the UE in response to the pre-handover instruction, a random access preamble indicated by the index identifier;
    establishing, by the UE based on the configuration information, a radio bearer corresponding to the second eNB; and
    receiving, by the UE, a timing advance and an uplink indication message, wherein the uplink indication message is used to indicate an uplink resource used when the UE communicates with the second eNB, and the timing advance is used by the UE to perform uplink synchronization with the second eNB,
    **characterized in that**, before establishing a radio bearer, by further steps of:

    sending, by the UE, a second measurement report to the first eNB, and receiving a handover instruction returned by the first eNB for the second measurement report, wherein the second measurement report is used to indicate that the current cell and the neighboring cell meet a handover condition, and the handover instruction is used to instruct the UE to switch a cell serving the UE from the current cell to the neighboring cell;
    enabling, by the UE, the radio bearer in response to the handover instruction; and

sending, by the UE, a cell handover complete indication message to the second eNB.

2. The method according to claim 1, wherein the pre-handover instruction is specifically used to instruct the UE to send the random access preamble based on downlink timing, and the pre-handover instruction further comprises a physical random access channel, PRACH, time-frequency resource used to send the random access preamble.

3. The method according to claim 2, wherein the downlink timing is downlink timing of the current cell, the PRACH time-frequency resource is a resource of the current cell, and the random access preamble is allocated by the first eNB.

4. The method according to claim 2, wherein the downlink timing is downlink timing of the neighboring cell, the PRACH time-frequency resource is a resource of the neighboring cell, and the random access preamble is allocated by the second eNB.

5. A cell handover method, comprising:

receiving, by a first evolved NodeB, eNB, a first measurement report sent by user equipment, UE, wherein the first eNB is a base station to which a current cell serving the UE belongs, and the first measurement report is used to indicate that the current cell and a neighboring cell of the current cell meet a pre-handover condition; when the first eNB determines, based on the first measurement report, that a pre-handover procedure needs to be executed, sending, by the first eNB, a pre-handover request message to a second eNB, wherein the pre-handover request message is used to request the second eNB to indicate whether the UE is to execute a pre-handover procedure, and the second eNB is a base station to which the neighboring cell belongs; receiving, by the first eNB, a pre-handover acknowledgement message returned by the second eNB in response to the pre-handover request message; and sending, by the first eNB, a pre-handover instruction to the UE based on the pre-handover acknowledgement message, wherein the pre-handover instruction comprises an index identifier and configuration information corresponding to the second eNB, and the pre-handover instruction is used to instruct the UE to send a random access preamble indicated by the index identifier; **characterized by** further steps of:

receiving, by the first eNB, a second measurement report sent by the UE, wherein the second measurement report is used to indicate that the current cell and the neighboring cell meet a handover condition; and sending, by the first eNB, a handover instruction for the second measurement report to the UE, wherein the handover instruction is used to instruct the UE to switch a cell serving the UE from the current cell to the neighboring cell.

6. The method according to claim 5, wherein the pre-handover instruction is specifically used to instruct the UE to send the random access preamble based on downlink timing, and the pre-handover instruction further comprises a physical random access channel, PRACH, time-frequency resource used to send the random access preamble.

7. The method according to claim 6, wherein the downlink timing is downlink timing of the current cell, the PRACH time-frequency resource is a resource of the current cell, and the random access preamble is allocated by the first eNB; and
the method further comprises:
sending, by the first eNB, an identifier of a time-frequency location of the random access preamble in the PRACH time-frequency resource and the index identifier to the second eNB.

**Patentansprüche**

1. Zellenübergabeverfahren, welches Folgendes umfasst:

Senden, durch ein Benutzergerät, UE (*User Equipment*), eines ersten Messberichts an einen ersten evolvierten Knoten B, eNB (*evolved NodeB*), wobei der erste eNB eine Basisstation ist, zu welcher eine aktuelle Zelle, die das UE bedient, gehört, und der erste Messbericht verwendet wird, um anzugeben, dass die aktuelle Zelle und eine benachbarte Zelle der aktuellen Zelle eine Vor-Übergabebedingung erfüllen;
Empfangen, durch das UE, einer Vor-Übergabeanweisung, die durch den ersten eNB für den ersten Messbericht zurückgesendet wird, wobei die Vor-Übergabeanweisung einen Indexidentifikator und Konfigurationsinformationen, die einem zweiten eNB entsprechen, umfasst;

Senden, durch das UE, als Reaktion auf die Vor-Übergabeanweisung, einer Direktzugriffspräambel, die durch den Indexidentifikator angegeben wird;

Aufbauen, durch das UE, basierend auf den Konfigurationsinformationen, eines Funkträgers, der dem zweiten eNB entspricht; und

Empfangen, durch das UE, eines Timing-Advance und einer Uplink-Angabenachricht, wobei die Uplink-Angabenachricht verwendet wird, um eine Uplink-Ressource anzugeben, die verwendet wird, wenn das UE mit dem zweiten eNB kommuniziert, und der Timing-Advance durch das UE verwendet wird, um Uplink-Synchronisation mit dem zweiten eNB durchzuführen,

**dadurch gekennzeichnet, dass**, vor dem Aufbauen eines Funkträgers, ferner folgende Schritte erfolgen:

Senden, durch das UE, eines zweiten Messberichts an den ersten eNB und Empfangen einer Übergabeanweisung, die durch den ersten eNB für den zweiten Messbericht zurückgesendet wird, wobei der zweite Messbericht verwendet wird, um anzugeben, dass die aktuelle Zelle und die benachbarte Zelle eine Übergabebedingung erfüllen, und die Übergabeanweisung verwendet wird, um das UE anzuweisen, eine Zelle, die das UE bedient, von der aktuellen Zelle zu der benachbarten Zelle zu wechseln;

Aktivieren, durch das UE, des Funkträgers als Reaktion auf die Übergabeanweisung; und

Senden, durch das UE, einer Zellenübergabeabschluss-Angabenachricht an den zweiten eNB.

2. Verfahren nach Anspruch 1, wobei die Vor-Übergabeanweisung spezifisch verwendet wird, um das UE anzuweisen, die Direktzugriffspräambel basierend auf dem Downlink-Timing zu senden, und die Vor-Übergabeanweisung ferner eine physikalische Direktzugriffskanal, PRACH (*Physical Random Access Channel*) - Zeit-Frequenz-Ressource umfasst, die zum Senden der Direktzugriffspräambel verwendet wird.

3. Verfahren nach Anspruch 2, wobei das Downlink-Timing ein Downlink-Timing der aktuellen Zelle ist, die PRACH-Zeit-Frequenz-Ressource eine Ressource der aktuellen Zelle ist und die Direktzugriffspräambel durch den ersten eNB zugeteilt wird.

4. Verfahren nach Anspruch 2, wobei das Downlink-Timing ein Downlink-Timing der benachbarten Zelle ist, die PRACH-Zeit-Frequenz-Ressource eine Ressource der benachbarten Zelle ist und die Direktzugriffspräambel durch den zweiten eNB zugeteilt wird.

5. Zellenübergabeverfahren, welches Folgendes umfasst:

Empfangen, durch einen ersten evolvierten Knoten B, eNB (*evolved NodeB*), eines ersten Messberichts, der durch ein Benutzergerät, UE (*User Equipment*), gesendet wird, wobei der erste eNB eine Basisstation ist, zu welcher eine aktuelle Zelle, die das UE bedient, gehört, und der erste Messbericht verwendet wird, um anzugeben, dass die aktuelle Zelle und eine benachbarte Zelle der aktuellen Zelle eine Vor-Übergabebedingung erfüllen;

wenn der erste eNB basierend auf dem ersten Messbericht bestimmt, dass eine Vor-Übergabeprozedur ausgeführt werden muss, Senden, durch den ersten eNB, einer Vor-Übergabeanfragenachricht an einen zweiten eNB, wobei die Vor-Übergabeanfragenachricht verwendet wird, um den zweiten eNB aufzufordern anzugeben, ob das UE eine Vor-Übergabeprozedur ausführen soll, und der zweite eNB eine Basisstation ist, zu welcher die benachbarte Zelle gehört;

Empfangen, durch den ersten eNB, einer Vor-Übergabebestätigungsnachricht, die durch den zweiten eNB als Reaktion auf die Vor-Übergabeanfragenachricht zurückgesendet wird; und

Senden, durch den ersten eNB, einer Vor-Übergabeanweisung an das UE basierend auf der Vor-Übergabebestätigungsnachricht, wobei die Vor-Übergabeanweisung einen Indexidentifikator und Konfigurationsinformationen, die dem zweiten eNB entsprechen, umfasst, und die Vor-Übergabeanweisung verwendet wird, um das UE anzuweisen, eine Direktzugriffspräambel zu senden, die durch den Indexidentifikator angegeben wird;

ferner **gekennzeichnet durch** die folgenden Schritte:

Empfangen, durch den ersten eNB, eines zweiten Messberichts, der durch das UE gesendet wird, wobei der zweite Messbericht verwendet wird, um anzugeben, dass die aktuelle Zelle und die benachbarte Zelle eine Übergabebedingung erfüllen; und

Senden, durch den ersten eNB, einer Übergabeanweisung für den zweiten Messbericht an das UE, wobei die Übergabeanweisung verwendet wird, um das UE anzuweisen, eine Zelle, die das UE bedient, von der aktuellen Zelle zu der benachbarten Zelle zu wechseln.

6. Verfahren nach Anspruch 5, wobei die Vor-Übergabeanweisung spezifisch verwendet wird, um das UE anzuweisen, die Direktzugriffspräambel basierend auf einem Downlink-Timing zu senden, und die Vor-Übergabeanweisung ferner eine physikalische Direktzugriffskanal, PRACH (*Physical Random Access Channel*) -Zeit-Frequenz-Ressource umfasst, die zum Senden der Direktzugriffspräambel verwendet wird.

7. Verfahren nach Anspruch 6, wobei das Downlink-Timing ein Downlink-Timing der aktuellen Zelle ist, die PRACH-Zeit-Frequenz-Ressource eine Ressource der aktuellen Zelle ist und die Direktzugriffspräambel durch den ersten eNB zugeteilt wird; und
das Verfahren ferner Folgendes umfasst:
Senden, durch den ersten eNB, eines Identifikators einer Zeit-Frequenz-Position der Direktzugriffspräambel in der PRACH-Zeit-Frequenz-Ressource und des Indexidentifikators an den zweiten eNB.

**Revendications**

1. Procédé de transfert de cellule, comprenant les étapes consistant à :

envoyer, par un équipement utilisateur, UE, un premier rapport de mesure à un premier nœud B évolué, eNB, le premier eNB étant une station de base à laquelle appartient une cellule actuelle desservant l'UE, et le premier rapport de mesure étant utilisé pour indiquer que la cellule actuelle et une cellule voisine de la cellule actuelle remplissent une condition de pré-transfert ;
recevoir, par l'UE, une instruction de pré-transfert renvoyée par le premier eNB pour le premier rapport de mesure, l'instruction de pré-transfert comprenant un identifiant d'index et des informations de configuration correspondant à un deuxième eNB ;
envoyer, par l'UE, en réponse à l'instruction de pré-transfert, un préambule d'accès aléatoire indiqué par l'identifiant d'index ;
établir, par l'UE, sur la base des informations de configuration, un support radio correspondant au deuxième eNB ; et
recevoir, par l'UE, une avance temporelle et un message d'indication de liaison montante, le message d'indication de liaison montante étant utilisé pour indiquer une ressource de liaison montante utilisée lorsque l'UE communique avec le deuxième eNB, et l'avance temporelle étant utilisée par l'UE pour effectuer une synchronisation de liaison montante avec le deuxième eNB,
caractérisé, avant l'établissement d'un support radio, par les étapes supplémentaires consistant à :

envoyer, par l'UE, un deuxième rapport de mesure au premier eNB, et
recevoir une instruction de transfert renvoyée par le premier eNB pour le deuxième rapport de mesure, le deuxième rapport de mesure étant utilisé pour indiquer que la cellule actuelle et la cellule voisine remplissent une condition de transfert, et l'instruction de transfert étant utilisée pour ordonner à l'UE de commuter une cellule desservant l'UE de la cellule actuelle sur la cellule voisine ;
activer, par l'UE, le support radio en réponse à l'instruction de transfert ; et
envoyer, par l'UE, un message d'indication d'un transfert de cellule achevé au deuxième eNB.

2. Procédé selon la revendication 1, dans lequel l'instruction de pré-transfert est spécifiquement utilisée pour ordonner à l'UE d'envoyer le préambule d'accès aléatoire sur la base d'une temporisation de liaison descendante, et l'instruction de pré-transfert comprend en outre une ressource de temps-fréquence d'un canal physique d'accès aléatoire, PRACH, utilisée pour envoyer le préambule d'accès aléatoire.

3. Procédé selon la revendication 2, dans lequel la temporisation de liaison descendante est une temporisation de liaison descendante de la cellule actuelle, la ressource de temps-fréquence de PRACH est une ressource de la cellule actuelle, et le préambule d'accès aléatoire est alloué par le premier eNB.

4. Procédé selon la revendication 2, dans lequel la temporisation de liaison descendante est une temporisation de liaison descendante de la cellule voisine, la ressource de temps-fréquence de PRACH est une ressource de la cellule voisine, et le préambule d'accès aléatoire est alloué par le deuxième eNB.

5. Procédé de transfert de cellule, comprenant les étapes consistant à :

recevoir, par un premier nœud B évolué, eNB, un premier rapport de mesure envoyé par un équipement utilisateur, UE, le premier eNB étant une station de base à laquelle appartient une cellule actuelle desservant l'UE, et le premier rapport de mesure étant utilisé pour indiquer que la cellule actuelle et une cellule voisine de la cellule actuelle remplissent une condition de pré-transfert ;

lorsque le premier eNB détermine, sur la base du premier rapport de mesure, qu'une procédure de pré-transfert doit être exécutée, envoyer, par le premier eNB, un message de demande de pré-transfert à un deuxième eNB, dans lequel le message de demande de pré-transfert est utilisé pour demander au deuxième eNB d'indiquer si l'UE doit exécuter une procédure de pré-transfert, et le deuxième eNB est une station de base à laquelle appartient la cellule voisine ;

recevoir, par le premier eNB, un message d'accusé de réception de pré-transfert renvoyé par le deuxième eNB en réponse au message de demande de pré-transfert ; et

envoyer, par le premier eNB, une instruction de pré-transfert à l'UE sur la base du message d'accusé de réception de pré-transfert, dans lequel l'instruction de pré-transfert comprend un identifiant d'index et des informations de configuration correspondant au deuxième eNB, et l'instruction de pré-transfert est utilisée pour ordonner à l'UE d'envoyer un préambule d'accès aléatoire indiqué par l'identifiant d'index ;

**caractérisé par** les étapes supplémentaires consistant à :

recevoir, par le premier eNB, un deuxième rapport de mesure envoyé par l'UE, dans lequel le deuxième rapport de mesure est utilisé pour indiquer que la cellule actuelle et la cellule voisine remplissent une condition de transfert ; et

envoyer, par le premier eNB, une instruction de transfert pour le deuxième rapport de mesure à l'UE, l'instruction de transfert étant utilisée pour ordonner à l'UE de commuter une cellule desservant l'UE de la cellule actuelle sur la cellule voisine.

6. Procédé selon la revendication 5, dans lequel l'instruction de pré-transfert est spécifiquement utilisée pour ordonner à l'UE d'envoyer le préambule d'accès aléatoire sur la base d'une temporisation de liaison descendante, et l'instruction de pré-transfert comprend en outre une ressource de temps-fréquence d'un canal physique d'accès aléatoire, PRACH, utilisée pour envoyer le préambule d'accès aléatoire.

7. Procédé selon la revendication 6, dans lequel la temporisation de liaison descendante est une temporisation de liaison descendante de la cellule actuelle, la ressource de temps-fréquence de PRACH est une ressource de la cellule actuelle, et le préambule d'accès aléatoire est alloué par le premier eNB ; et

le procédé comprend en outre :

l'envoi, par le premier eNB, d'un identifiant d'un emplacement de temps-fréquence du préambule d'accès aléatoire dans la ressource de temps-fréquence de PRACH et de l'identifiant d'index au deuxième eNB.

FIG. 1

FIG. 2

UE sends a first measurement report to a first eNB — S301

The UE receives a pre-handover instruction returned by the first eNB for the first measurement report — S302

The UE sends, in response to the pre-handover instruction, a random access preamble indicated by an index identifier — S303

The UE establishes, based on configuration information, a radio bearer corresponding to a second eNB — S304

The UE receives a timing advance and an uplink indication message — S305

FIG. 3

| UE | SeNB | TeNB |
|---|---|---|

S401. Send a first measurement report

S402. Receive the first measurement report, and determine, based on the first measurement report, whether a pre-handover procedure needs to be executed

S403. Send a pre-handover request message

S404. Receive the pre-handover request message, and determine, based on the pre-handover request message, whether a communication resource that can be provided by a second eNB meets a communication requirement of UE

S405. Send a pre-handover acknowledgement message for the pre-handover request message

S406. Receive the pre-handover acknowledgement message

S407. Send a pre-handover instruction based on the pre-handover acknowledgement message

S408. Send an identifier of a time-frequency location of a random access preamble in an RACH time-frequency resource and an index identifier

S409. Receive the identifier of the time-frequency location in the PRACH time-frequency resource and the index identifier

S410. Receive the pre-handover instruction

TO FIG. 4B

TO FIG. 4B

TO FIG. 4B

FIG. 4A

CONT.
FROM
FIG. 4A

CONT.
FROM
FIG. 4A

CONT.
FROM
FIG. 4A

S411. Send the random access preamble in response to the pre-handover instruction based on downlink timing of a current cell and the PRACH time-frequency resource indicated by a random access channel configuration field

S412. Establish a new set of bearers: an SRB and a DRB based on configuration information that is of an SRB and a DRB and that corresponds to the second eNB, and update a security algorithm and a key key used when the UE performs data communication with the second eNB

S413. Receive, based on the identifier of the time-frequency location and the index identifier, the random access preamble sent by the UE, and calculate a TA of the UE

S414. Send the TA of the UE and an uplink indication message used to indicate an uplink resource used when the UE performs data communication with the second eNB

S415. Receive the TA of the UE and the uplink indication message

S416. Send the TA of the UE and the uplink indication message

S417. Receive the TA of the UE and the uplink indication message

S418. Send a second measurement report

TO
FIG. 4C

TO
FIG. 4C

TO
FIG. 4C

FIG. 4B

CONT.
FROM
FIG. 4B

CONT.
FROM
FIG. 4B

CONT.
FROM
FIG. 4B

S419. Receive the second
measurement report, and determine,
based on the second measurement
report, whether a handover
procedure needs to be executed

S420. Send a
handover instruction

S421. Receive the handover
instruction, and enable the SRB
and the DRB in response to the
handover instruction

S422. Send a cell handover complete
indication message

FIG. 4C

| UE | SeNB | TeNB |
|----|------|------|

S501. Send a first
measurement report

S502. Receive the first
measurement report, and determine,
based on the first measurement
report, whether a pre-handover
procedure needs to be executed

S503. Send a pre-handover
request message

S504. Receive the pre-handover
request message, and determine,
based on the pre-handover
request message, whether a
communication resource that can
be provided by a second eNB
meets a communication
requirement of UE

S505. Send a pre-handover
acknowledgement message
for the pre-handover
request message

S506. Receive the pre-handover
acknowledgement message

S507. Send a pre-handover
instruction based on the
pre-handover
acknowledgement message

S508. Receive the pre-
handover instruction

FIG. 5A

38

CONT.
FROM
FIG. 5A

CONT.
FROM
FIG. 5A

CONT.
FROM
FIG. 5A

S509. In response to the pre-handover instruction, send a
random access preamble in a target gap based on
downlink timing of a neighboring cell and a PRACH
time-frequency resource indicated by a random access
channel configuration field

S510. Receive the random access
preamble sent by the UE, and
calculate a TA of the UE

S511. Send a random access response message including
the TA of the UE and an uplink indication message used
to indicate an uplink resource used when the UE
communicates with the second eNB

S512. Receive, in the target gap, the
random access response sent by the
second eNB

S513. Establish a new set of bearers:
an SRB and a DRB based on
configuration information that is of an
SRB and a DRB and that corresponds
to the second eNB, and update a
security algorithm and a key key used
when the UE performs data
communication with the second eNB

S514. Send a second
measurement report

TO
FIG. 5C

TO
FIG. 5C

TO
FIG. 5C

FIG. 5B

CONT.
FROM
FIG. 5B

CONT.
FROM
FIG. 5B

CONT.
FROM
FIG. 5B

S515. Receive the second measurement report, and determine, based on the second measurement report, whether a handover procedure needs to be executed

S516. Send a handover request message

S517. Receive the handover request message

S519. Send a handover instruction based on the handover request response message

S518. Send a handover request response message

S520. Receive the handover instruction, and enable the SRB and the DRB in response to the handover instruction

S521. Send a cell handover complete indication message

FIG. 5C

40

| UE | SeNB | TeNB |
|---|---|---|

S601. Send a first measurement report

S602. Receive the first measurement report, and determine, based on the first measurement report, whether a pre-handover procedure needs to be executed

S603. Send a pre-handover request message

S604. Receive the pre-handover request message, and determine, based on the pre-handover request message, whether a communication resource that can be provided by a second eNB meets a communication requirement of UE

S605. Send a pre-handover acknowledgement message for the pre-handover request message

S606. Send a pre-handover instruction based on the pre-handover acknowledgement message

S607. Complete a random access procedure

S608. Establish an SRB and a DRB corresponding to the second eNB

S609. Send a second measurement report

TO FIG. 6B

TO FIG. 6B

TO FIG. 6B

FIG. 6A

CONT.
FROM
FIG. 6A

CONT.
FROM
FIG. 6A

CONT.
FROM
FIG. 6A

S610. Receive the second
measurement report, and determine,
based on the second measurement
report, whether a handover
procedure needs to be executed

S611. Send a value
corresponding to each
current sub-key of the UE

S612. Send a
handover instruction

S613. Receive the handover
instruction, and enable the SRB
and the DRB in response to the
second handover instruction

S614. Send a cell handover
complete indication message

FIG. 6B

Sending module — 701

703

702

Receiving module — Processing module

User equipment

FIG. 7

804

801

802

Receiver ——— Processor ——— Program code

Memory

803

Transmitter

User equipment

FIG. 8

903

Sending module

902

901

Receiving module ——— Processing module

Evolved NodeB

FIG. 9

FIG. 10

FIG. 11

1202

1204

1201

Program code

Receiver ———— Processor ———— Memory

1203

Transmitter

Evolved NodeB

FIG. 12

First eNB

UE

Second eNB

FIG. 13

**REFERENCES CITED IN THE DESCRIPTION**

**Patent documents cited in the description**

- US 2008267131 A1